# EUROPEAN PATENT APPLICATION

(11) **EP 1 975 839 A2**
(43) Date of publication of application: **01.10.2008**
(21) Application number: 08250824.3
(22) Date of filing: 11.03.2008
(51) Int. Cl.: G06F 21/02

(54) **Information processing apparatus and method, program, and information processing system**

(30) Priority: 30.03.2007 JP 2007094172
(71) Applicant: Sony Corporation, Tokyo (JP)
(72) Inventor: Okaue, Takumi, c/o Sony Corporation, Tokyo (JP)
(74) Representative: Mills, Julia

(57) **Abstract**

An information processing apparatus limiting access to a storage medium from outside, includes unlock command obtaining means for obtaining, from an authentication unit configured separately from the information processing apparatus, a unlock command requesting release of inhibition of access to the storage medium, and also an authentication mode ID for identifying an authentication mode of the authentication unit, authentication data supplying means for supplying the authentication unit with authentication data used as sample data indicating that a user is verified in an authentication processing of a user instructing access to the storage medium, the authentication data being corresponding to the authentication mode ID obtained together with the unlock command from the unlock command obtaining means, authentication result obtaining means for obtaining, from the authentication unit, an authentication result of the authentication processing performed by using the authentication data supplied from the authentication data supplying means, authentication result confirming means for confirming contents of the authentication result, and release means for releasing inhibition of access to the storage medium from outside when, as a result of confirmation made by the authentication result confirming means, the user is authenticated as being verified.

## Description

The present invention relates to the field of information processing apparatus, methods, programs, and information processing systems. In particular, the present invention relates to an information processing apparatus, a method, a program, and an information processing system, each of which is adapted to be capable of realizing a storage media with enhanced safety and convenience.

There have been storage media in which reading and writing of information on a storage medium including a hard disk and a flash memory, and the like housed therein are limited by authentication techniques, such as password authentication and fingerprint authentication (for example, refer to Japanese Patent Application Publication No. JP 2000-76443).

These storage media are provided with the configuration for accepting authentication information of a fingerprint and a password, such as a fingerprint taking unit and a keyboard. The authentication information inputted through the configuration and authentication information recorded in advance are collated, and only when judged as being an authorized user, access to the storage medium is permitted (unlocked). Otherwise, the access to the storage medium is inhibited (locked), that is, reading and writing of data are inhibited. This prevents the leaks of the information stored in the storage medium to a third party, thereby enhancing safety.

Recently, as information processing techniques are improved, enlargement of capacity of storage media and downsizing of storage media are advanced.

However, as described above, the storage media is provided with the configuration which accepts authentication information, and it is therefore necessary to keep a certain size space for the configuration, such as the mechanism for taking fingerprint patterns and the keyboard, thus there is a possibility that further downsizing of the storage media becomes difficult.

In addition, since the storage medium for storing secret information and the configuration for accepting authentication information are integrally housed in one casing, there has been a possibility that other authentication techniques can not be easily applied. The authentication techniques are steadily developed to allow a rapid progress in improving the technical level thereof. In other words, it can be said that the safety of old authentication techniques are lowered day by day. However, as described above, in the related art storage media, it is difficult to apply authentication technique other than that previously provided therein. Hence, even if a safer new authentication technique is developed due to the future improvement of information techniques, this authentication technique might be inapplicable. That is, it might be impossible for the related art storage media to ensure sufficient safety in future.

Further, since the storage medium for storing secret information and the configuration for accepting authentication information are integrally housed in one casing, if the authentication information is leaked to other persons, the others might easily obtain the secret information by getting the storage media.

With this in view, it is desirable to further improve the safety and convenience of the storage media.

Various respective aspects and features of the invention are defined in the appended claims. Combinations of features from the dependent claims may be combined with features of the independent claims as appropriate and not merely as explicitly set out in the claims.

In the first embodiment of the present invention, there is provided an information processing apparatus limiting access to a storage medium from outside. The apparatus includes unlock command obtaining means, authentication data supplying means, authentication result obtaining means, authentication result confirming means and release means. The unlock command obtaining means is for obtaining, from an authentication unit configured separately from the information processing apparatus, unlock command requesting release of access inhibition to the storage medium, and also an authentication mode ID for identifying an authentication mode of the authentication unit. The authentication data supplying means is for supplying, to the authentication unit, authentication data used as sample data identifying that a user is authorized in an authentication processing of a user instructing access to the storage medium. The authentication data corresponds to the authentication mode ID obtained together with the unlock command from the unlock command obtaining means. The authentication result obtaining means is for obtaining, from the authentication unit, an authentication result of the authentication processing performed by using the authentication data supplied from the authentication data supplying means. The authentication result confirming means is for confirming contents of the authentication result. The release means is for releasing inhibition of access to the storage medium from outside when, as a result of confirmation made by the authentication result confirming means, the user is authenticated as being authorized.

The information processing apparatus may further include random number generating means for generating a random number by a predetermined method. The authentication data supplying means may supply a random number generated by the random number generating means, together with the authentication data to the authentication unit. The authentication result obtaining means may obtain the random number together with the authentication result from the authentication unit. The authentication result confirming means may confirm whether the random number obtained from the authentication result obtaining means is matched with the random number generated by the random number generating means.

The authentication result obtained by the authentication result obtaining means may be encrypted by a secret key, which is predetermined electronic key information in the authentication unit. The information processing apparatus may further includes decoding means for decoding the authentication result by using a public key, which is electronic key information for publication corresponding to the secret key.

There may be further provided with storage control means for causing the storage medium to store information. The storage control means may cause a predetermined storage area in the storage medium to store the authentication data, the authentication mode ID and the public key.

The authentication data stored in the storage medium by the storage control means may be encrypted authentication data encrypted by the authentication unit by a predetermined encryption mode.

There may be further provided with registration information obtaining means for obtaining the encrypted authentication data, the authentication mode ID and the public key from the authentication unit, and inhibiting means for inhibiting access to the storage medium. The storage control means may cause the encrypted authentication data, the authentication mode ID and the public key obtained by the registration information obtaining means to be stored in the storage medium. The inhibiting means may inhibit access to the storage medium when the storage control means causes the encrypted authentication data, the authentication mode ID and the public key to be stored in the storage medium.

There is also provided an information processing method of an information processing apparatus limiting access to a storage medium from outside. The method includes the steps of: (i) obtaining, from an authentication unit configured separately from the information processing apparatus, an unlock command requesting release of inhibition of access to the storage medium, and also an authentication mode ID for identifying an authentication mode of the authentication unit; (ii) supplying, to the authentication unit, authentication data used as sample data indicating that a user is authorized in an authentication processing of a user instructing access to the storage medium, the authentication data being corresponding to the authentication mode ID obtained together with the unlock command; (iii) obtaining, from the authentication unit, an authentication result of the authentication processing performed by using the supplied authentication data; (iv) confirming contents of the authentication result; and (v) releasing inhibition of access to the storage medium from outside when, as a result of confirmation, the user is authenticated as being authorized.

There is also provided a program causing a computer limiting access to a storage medium from outside to execute information processings including the steps of: (i) obtaining, from an authentication unit configured separately from the computer, an unlock command requesting release of inhibition of access to the storage medium, and also an authentication mode ID for identifying an authentication mode of the authentication unit; (ii) supplying, to the authentication unit, authentication data used as sample data indicating that a user is authorized in an authentication processing of a user instructing access to the storage medium, the authentication data being corresponding to the authentication mode ID obtained together with the unlock command; (iii) obtaining, from the authentication unit, an authentication result of the authentication processing performed by using the supplied authentication data; (iv) confirming contents of the authentication result; and (v) releasing inhibition of access to the storage medium from outside when, as a result of confirmation, the user is authenticated as being authorized.

According to a second embodiment of the present invention, there is provided an information processing apparatus limiting access to a storage medium from outside. The apparatus includes unlock command obtaining means, random number generating means, authentication data supplying means, authentication result obtaining means, confirming means and release means. The unlock command obtaining means is for obtaining, from an authentication unit configured separately from the information processing apparatus, an unlock command requesting release of inhibition of access to the storage medium. The random number generating means is for generating a random number by a predetermined method. The authentication data supplying means is for supplying, to the authentication unit, authentication data used as sample data indicating that a user is authorized in an authentication processing of a user instructing access to the storage medium, and the random number generated by the random number generating means. The authentication result obtaining means is for obtaining, from the authentication unit, an authentication result of the authentication processing performed by using the authentication data supplied from the authentication data supplying means, and the random number. The confirming means is for confirming contents of the authentication result and confirming whether the random number obtained by the authentication result obtaining means is identical in value with the random number generated by the random number generating means. The release means is for releasing inhibition of access to the storage medium from outside when, as a result of confirmation made by the confirming means, the two random numbers are identical in value and the user is authenticated as being authorized.

The unlock command obtaining means may obtain authentication mode ID for identifying an authentication mode of the authentication unit, together with the unlock command. The authentication data supplying means may supply, to the authentication unit, authentication data corresponding to the authentication mode ID obtained together with the unlock command from the unlock command obtaining means, and the random number generated by the random number generating means.

The authentication result obtained by the authentication result obtaining means is encrypted by a secret key being predetermined electronic key information, in the authentication unit. There may be further provided with decoding means for decoding the authentication result by using a public key being electronic key information for publication corresponding to the secret key.

There is further provided with storage control means for causing the storage medium to store information. The storage control means may cause a predetermined storage area in the storage medium to store the authentication data, the authentication mode ID and the public key.

The authentication data stored in the storage medium by the storage control means may be encrypted authentication data encrypted by the authentication unit by a predetermined encryption mode.

There may be further provided with registration information obtaining means for obtaining the encrypted authentication data, the authentication mode ID and the public key from the authentication unit, and inhibiting means for inhibiting access to the storage medium. The storage control means may cause the encrypted authentication data, the authentication mode ID and the public key obtained from the registration information obtaining means to be stored in the storage medium. The inhibiting means may inhibit access to the storage medium when the storage control means causes the encrypted authentication data, the authentication mode ID and the public key to be stored in the storage medium.

According to the second embodiment of the present invention, there is also provided an information processing method of an information processing apparatus limiting access to a storage medium from outside. The method includes the steps of: (i) obtaining, from an authentication unit configured separately from the information processing apparatus, an unlock command requesting release of inhibition of access to the storage medium; (ii) generating a random number by a predetermined method; (iii) supplying the authentication unit with authentication data used as sample data indicating that a user is authorized in an authentication processing of a user instructing access to the storage medium, and the generated random number; (iv) obtaining, from the authentication unit, an authentication result of the authentication processing performed by using the supplied authentication data, and a random number; (v) confirming contents of the authentication result, and confirming whether the obtained random number and the generated random number are identical in value; and (vi) releasing inhibition of access to the storage medium from outside when, as a result of confirmation, the two random numbers are identical in value, and the user is authenticated as being verified.

According to the second embodiment of the present invention, there is also provided a program causing a computer limiting access to a storage medium from outside to execute information processings including the steps of: (i) obtaining, from an authentication unit configured separately from the information processing apparatus, a unlock command requesting release of inhibition of access to the storage medium; (ii) generating a random number by a predetermined method; (iii) supplying the authentication unit with authentication data used as sample data indicating that a user is authorized in an authentication processing of a user instructing access to the storage medium, and the generated random number; (iv) obtaining, from the authentication unit, an authentication result of the authentication processing performed by using the supplied authentication data and a random number; (v) confirming contents of the authentication result, and confirming whether the obtained random number and the generated random number are identical in value; and (vi) releasing inhibition of access to the storage medium from outside when, as a result of confirmation, the two random numbers are identical in value, and the user is authenticated as being verified.

According to a third embodiment of the present invention, there is provided an information processing apparatus for authenticating a user performing an instruction for access to a storage medium where access from outside is limited. The apparatus includes authentication data accepting means, unlock command supplying means, authentication data obtaining means, authentication means and authentication result supplying means. The authentication data accepting means is for accepting authentication data inputted by the user for the user authentication. The unlock command supplying means is for supplying an unlock command requesting release of inhibition of access to the storage medium, and an authentication mode ID for identifying an authentication mode of the user authentication performed in the information processing apparatus, to an input/output controller which is separated from the information processing apparatus and limits accesses to the storage medium. The authentication data obtaining means is for obtaining, from the input/output controller, authentication data used as sample data indicating that a user is authorized, the authentication data being corresponding to the authentication mode ID supplied together with the unlock command from the unlock command supplying means. The authentication means is for performing a user authentication by comparing the authentication data accepted by the authentication data accepting means, with the authentication data obtained by the authentication data obtaining means. The authentication result supplying means is for supplying an authentication result of the user authentication performed by the authentication means, to the input/output controller.

The authentication data obtained by the authentication data obtaining means may be encrypted authentication data encrypted by a predetermined encryption mode. There may be further provided with decoding means for decoding the encrypted authentication data by a decoding mode corresponding to the predetermined encryption mode.

The authentication data obtaining means may obtain a predetermined random number together with the authentication data. The authentication result supplying means may supply the random number obtained by the authentication data obtaining means together with the authentication result.

There may be further provided with key holding means for holding a secret key being predetermined electronic key information, and authentication result encrypting means for encrypting the authentication result by using the secret key held by the key holding means.

In the key holding means, a public key being electronic key information for publication corresponding to the secret key may be held. There may be further provided with authentication data encrypting means and lock command supplying means. The authentication data encrypting means is for encrypting the authentication data accepted by the authentication data accepting means by a predetermined encryption mode. The lock command supplying means is for supplying the input/output controller with encrypted authentication data obtained by the authentication data encrypting means, the authentication mode ID and the public key held by the key holding means, together with a lock command requesting inhibition of access to the storage medium.

According to the third embodiment of the present invention, there is also provided an information processing method of an information processing apparatus for authenticating a user performing an instruction for access to a storage medium where access from outside is limited. The method includes the steps of: (i) accepting authentication data inputted by the user for the user authentication; (ii) supplying an unlock command requesting release of inhibition of access to the storage medium, and an authentication mode ID for identifying an authentication mode of the user authentication performed in the information processing apparatus, to an input/output controller which is separated from the information processing apparatus and limits access to the storage medium; (iii) obtaining, from the input/output controller, authentication data used as sample data indicating that a user is authorized, the authentication data being corresponding to the authentication mode ID supplied together with the unlock command; (iv) performing a user authentication by comparing the accepted authentication data with the obtained authentication data; and (v) supplying an authentication result of the user authentication to the input/output controller.

According to the third embodiment of the present invention, there is also provided a program for causing a computer authenticating a user instructing access to a storage medium where access from outside is limited, to perform information processings including the steps of: (i) accepting authentication data inputted by the user for the user authentication; (ii) supplying an unlock command requesting release of inhibition of access to the storage medium, and an authentication mode ID for identifying an authentication mode of the user authentication performed in the information processing apparatus, to an input/output controller which is separated from the information processing apparatus and limits access to the storage medium; (iii) obtaining, from the input/output controller, authentication data used as sample data indicating that a user is authorized, the authentication data being corresponding to the authentication mode ID supplied together with the unlock command; (iv) performing a user authentication by comparing the accepted authentication data with the obtained authentication data; and (v) supplying an authentication result of the user authentication to the input/output controller.

According to a fourth embodiment of the present invention, there is provided an information processing apparatus for performing an authentication of a user instructing access to a storage medium where access from outside is limited. The apparatus includes authentication data accepting means, unlock command supplying means, authentication data obtaining means, authentication means and authentication result supplying means. The authentication data accepting means is for accepting authentication data inputted by the user for the user authentication. The unlock command supplying means is for supplying an unlock command requesting release of inhibition of access to the storage medium, to an input/output controller which is separated from the information processing apparatus and limits access to the storage medium. The authentication data obtaining means is for obtaining, from the input/output controller, authentication data used as sample data indicating as being a verified user, and a predetermined random number. The authentication means is for performing a user authentication by comparing the authentication data accepted by the authentication data accepting means, with the authentication data obtained by the authentication data obtaining means. The authentication result supplying means is for supplying the input/output controller with an authentication result of the user authentication performed by the authentication means, together with the random number obtained by the authentication data obtaining means.

The authentication data obtained by the authentication data obtaining means is encrypted authentication data encrypted by a predetermined encryption mode. There may be further provided with decoding means for decoding the encrypted authentication data by a decoding mode corresponding to the predetermined encryption mode.

The unlock command supplying means may supply the input/output controller with an authentication mode ID for identifying an authentication mode of the user authentication performed in the information processing apparatus, together with the unlock command.

There may be further provided with key holding means for holding a secret key being predetermined electronic key information, and authentication result encrypting means for encrypting the authentication result by using the secret key held by the key holding means.

The key holding means may hold a public key being electronic key information for publication corresponding to the secret key. There may be further provided with authentication data encrypting means and lock command supplying means. The authentication data encrypting means is for encrypting the authentication data accepted by the authentication data accepting means by a predetermined encryption mode. The lock command supplying means is for supplying the input/output controller with encrypted authentication data obtained by the authentication data encrypting means, and the public key held by the key holding means, together with a lock command requesting inhibition of access to the storage medium.

According to the fourth embodiment of the present invention, there is also provided an information processing method of an information processing apparatus for authenticating a user performing an instruction for access to a storage medium where access from outside is limited. The method includes the steps of: (i) accepting authentication data inputted by the user for the user authentication; (ii) supplying an unlock command requesting release of inhibition of access to the storage medium, to an input/output controller which is separated from the information processing apparatus and limits access to the storage medium; (iii) obtaining, from the input/output controller, authentication data used as sample data indicating that a user is authorized, and a predetermined random number; (iv) authenticating the user by comparing the accepted authentication data with the obtained authentication data; and (v) supplying the input/output controller with an authentication result of the user authentication, together with the obtained random number.

According to the fourth embodiment of the present invention, there is also provided a program for causing a computer authenticating a user performing an instruction for access to a storage medium where access from outside is limited, to perform information processings including the steps of: (i) accepting authentication data inputted by the user for the user authentication; (ii) supplying an unlock command requesting release of inhibition of access to the storage medium, to an input/output controller which is separated from the information processing apparatus and limits access to the storage medium; (iii) obtaining, from the input/output controller, authentication data used as sample data indicating that a user is authorized, and a predetermined random number; (iv) authenticating the user by comparing the accepted authentication data with the obtained authentication data; and (v) supplying an authentication result of the user authentication and the obtained random number to the input/output controller.

According to a fifth embodiment of the present invention, there is provided an information processing system including an input/output controller for limiting access to a storage medium from outside, and an authentication unit which is separated from the input/output controller, and authenticates a user performing an instruction for access to the storage medium. The input/output controller includes unlock command obtaining means, authentication data supplying means, authentication result obtaining means, authentication result confirming means and release means. The unlock command obtaining means is for obtaining, from the authentication unit, an unlock command requesting release of inhibition of access to the storage medium, and also an authentication mode ID for identifying an authentication mode of the authentication unit. The authentication data supplying means is for supplying the authentication unit with authentication data used as sample data indicating that a user is authorized in the user authentication, the authentication data being corresponding to the authentication mode ID obtained together with the unlock command from the unlock command obtaining means. The authentication result obtaining means is for obtaining, from the authentication unit, an authentication result of a user obtained by using the authentication data supplied from the authentication data supplying means. The authentication result confirming means is for confirming contents of the authentication result. The release means is for releasing inhibition of access to the storage medium from outside when, as a result of confirmation made by the authentication result confirming means, the user is authenticated as being authorized. The authentication unit includes authentication data accepting means, unlock command supplying means, authentication data obtaining means, authentication means and authentication result supplying means. The authentication data accepting means is for accepting authentication data inputted by the user for the user authentication. The unlock command supplying means is for supplying the unlock command and the authentication mode ID to the input/output controller. The authentication data obtaining means is for obtaining, from the input/output controller, authentication data corresponding to the authentication mode ID together with the unlock command supplied from the unlock command supplying means. The authentication means is for authenticating the user by comparing the authentication data accepted by the authentication data accepting means, with the authentication data obtained by the authentication data obtaining means. The authentication result supplying means is for supplying an authentication result of the user authentication performed by the authentication means, to the input/output controller.

According to a sixth embodiment of the present invention, there is provided an information processing system including an input/output controller for limiting access to a storage medium from outside, and an authentication unit which is configured separately from the input/output controller, and authenticates a user performing an instruction for access to the storage medium. The input/output controller in the information processing system includes unlock command obtaining means, random number generating means, authentication data supplying means, authentication result obtaining means, confirming means and release means. The unlock command obtaining means is for obtaining, from the authentication unit, an unlock command requesting release of inhibition of access to the storage medium. The random number generating means is for generating a random number by a predetermined method. The authentication data supplying means is for supplying the authentication unit with authentication data used as sample data indicating a correct user in the user authentication, and the random number generated by the random number generating means. The authentication result obtaining means is for obtaining, from the authentication unit, an authentication result obtained by using the authentication data supplied from the authentication data supplying means, and a random number. The confirming means is for confirming contents of the authentication result and confirming whether the random number obtained by the authentication result obtaining means is identical in value with the random number generated by the random number generating means. The release means is for releasing inhibition of access to the storage medium from outside when, as a result of confirmation made by the confirming means, the two random numbers are identical in value and the user is authenticated as being authorized. The authentication unit in the information processing system includes authentication data accepting means, unlock command supplying means, authentication data obtaining means, authentication means and authentication result supplying means. The authentication data accepting means is for accepting authentication data inputted by the user for the user authentication. The unlock command supplying means is for supplying the unlock command to the input/output controller. The authentication data obtaining means is for obtaining, from the input/output controller, the authentication data and the random number. The authentication means is for authenticating the user by comparing the authentication data accepted by the authentication data accepting means, with the authentication data obtained by the authentication data obtaining means. The authentication result supplying means is for supplying the input/output controller with an authentication result of the user authentication performed by the authentication means, and the random number obtained by the authentication data obtaining means.

In the first embodiment of the present invention, the unlock command requesting the release of the access inhibition to the storage medium, and the authentication mode ID identifying the authentication mode of the authentication unit are obtained from the authentication unit configured separately from the information processing apparatus. The authentication data, which is used as sample data indicating a user instructing access to a storage medium is authorized in the authentication processing, and correspond to the authentication mode ID obtained together with the unlock command, are supplied to the authentication unit. From the authentication unit, the authentication result of the authentication processing performed by using the supplied authentication data is obtained, and the contents of the authentication result are confirmed. As a result of the confirmation, if the user is authenticated as being authorized, the inhibition of the access to the storage medium from outside is released.

In the second embodiment of the present invention, the unlock command requesting the release of the access inhibition to the storage medium is obtained from the authentication unit configured separately from the information processing apparatus. A random number is generated by a predetermined method. The authentication data used as sample data indicating that a user instructing access to a storage medium is authorized in the authentication processing, and the generated random number are supplied to the authentication unit. From the authentication unit, the authentication result of the authentication processing performed by using the supplied authentication data, and the random number are obtained. The contents of the authentication result and whether the obtained random number is identical in value with the generated random number are confirmed. As a result of these confirmations, if the two random numbers are identical in value, and the user is authenticated as being authorized, the inhibition of the access to the storage medium from outside is released.

In the third embodiment of the present invention, the authentication data inputted by the user for the user authentication is accepted. The unlock command requesting the release of the access inhibition to the storage medium, and the authentication mode ID identifying the authentication mode of the user authentication performed in the information processing apparatus are supplied to the input/output controller which limits the access to the storage medium and is separated from the information processing apparatus. The authentication data, which is used as sample data indicating a user is authorized, and correspond to the authentication mode ID supplied together with the unlock command, are obtained from the input/output controller. The user authentication is performed by comparing the accepted authentication data with the obtained authentication data. The user authentication result is supplied to the input/output controller.

In the fourth embodiment of the present invention, the authentication data inputted by the user for the user authentication are accepted. The unlock command requesting the release of the access inhibition to the storage medium is supplied to the input/output controller that limits the access to the storage medium and is separated from the information processing apparatus. The authentication data used as sample data indicating that a user is authorized and a predetermined random number are obtained from the input/output controller. The user authentication is performed by comparing the accepted authentication data with the obtained authentication data. The user authentication result and the obtained random number are supplied to the input/output controller.

In the fifth embodiment of the present invention, in the input/output controller, the unlock command requesting the release of the access inhibition to the storage medium, and the authentication mode ID identifying the authentication mode of the authentication unit are obtained from the authentication unit. The authentication data, which is used as sample data indicating that a user is authorized in user authentication, and corresponds to the authentication mode ID obtained together with the unlock command, are supplied to the authentication unit. The user authentication result obtained by using the supplied authentication data is obtained from the authentication unit. The contents of the authentication result are confirmed. As a result of confirmation, if the user is authenticated as being correct, the inhibition of the access to the storage medium from outside is released. The authentication data that the user inputs for the user authentication are accepted in the authentication unit. The unlock command and the authentication mode ID are supplied to the input/output controller. The authentication data corresponding to the authentication mode ID supplied together with the unlock command are obtained from the input/output controller. The user authentication is performed by comparing the accepted authentication data with the obtained authentication data. The user authentication result is supplied to the input/output controller.

In the sixth embodiment of the present invention, in the input/output controller, the unlock command requesting the release of the access inhibition to the storage medium is obtained from the authentication unit. A random number is generated by a predetermined method. The authentication data used as sample data indicating that a user is authorized in user authentication, and the generated random number are supplied to the authentication unit. The user authentication result obtained by using the supplied authentication data, and the random number are obtained from the authentication unit. The contents of the authentication result and whether the obtained random number is identical in value with the generated random number are confirmed. As a result of the confirmation, if it is authenticated as the two random numbers are identical in value, and the user is authenticated as being authorized, the inhibition of the access to the storage medium from outside is released. The authentication data that the user inputs for the user authentication is accepted at the authentication unit. The unlock command is supplied to the input/output controller. The authentication data and the random number are obtained from the input/output controller. The user authentication is performed by comparing the accepted authentication data with the obtained authentication data. The user authentication result is supplied to the input/output controller, together with the obtained random number.

Embodiments of the invention will now be described with reference to the accompanying drawings, throughout which like parts are referred to by like references, and in which:
Fig. 1 is a block diagram showing a configuration example of the control system for controlling input/output of data in a storage medium, to which an embodiment of the present invention is applied;
Fig. 2 is a block diagram showing an example of the internal configuration of an authentication unit 101 in Fig. 1;
Fig. 3 is a block diagram showing an example of the internal configuration of a storage media 111 in Fig. 1;
Fig. 4 is a flow chart for explaining an example of the flow of lock processing;
Fig. 5 is a diagram for explaining an example of the condition of obtaining authentication data;
Fig. 6 is a diagram for explaining an example of the encrypting condition of authentication data;
Fig. 7 is a diagram for explaining examples of public keys, secret keys and authentication modes ID, respectively;
Fig. 8 is a diagram for explaining an example of the supplying condition of a lock command;
Fig. 9 is a flow chart for explaining an example of the flow of unlock processing;
Fig. 10 is a diagram for explaining an example of the condition of authentication data acquisition;
Fig. 11 is a diagram for explaining an example of the condition of supplying a random number;
Fig. 12 is a flow chart for explaining an example of the flow of lock processing;
Fig. 13 is a flow chart for explaining an example of the flow of unlock processing;
Fig. 14 is a diagram for explaining an example of the condition of a confidential area;
Figs. 15A to 15D are diagrams for explaining examples of specific system configurations, respectively; and
Fig. 16 is a block diagram showing an example of the configuration of a personal computer to which an embodiment of the present invention is applied.

Embodiments of the present invention will be described below. The correspondence between the elements of the present invention and the embodiments described in the specification or the drawings will be illustrated below. The following descriptions are to confirm that the embodiments for supporting the present invention are described in the specification or the drawings. Therefore, even if there are embodiments which are described in the specification or the drawings, but not described here as embodiments corresponding to elements of the present invention, it does not mean that the embodiments does not correspond to the elements. On the contrary, even if another embodiment is described here as one corresponding to an element, it does not mean that this embodiment does not correspond to any elements other than the above-mentioned element.

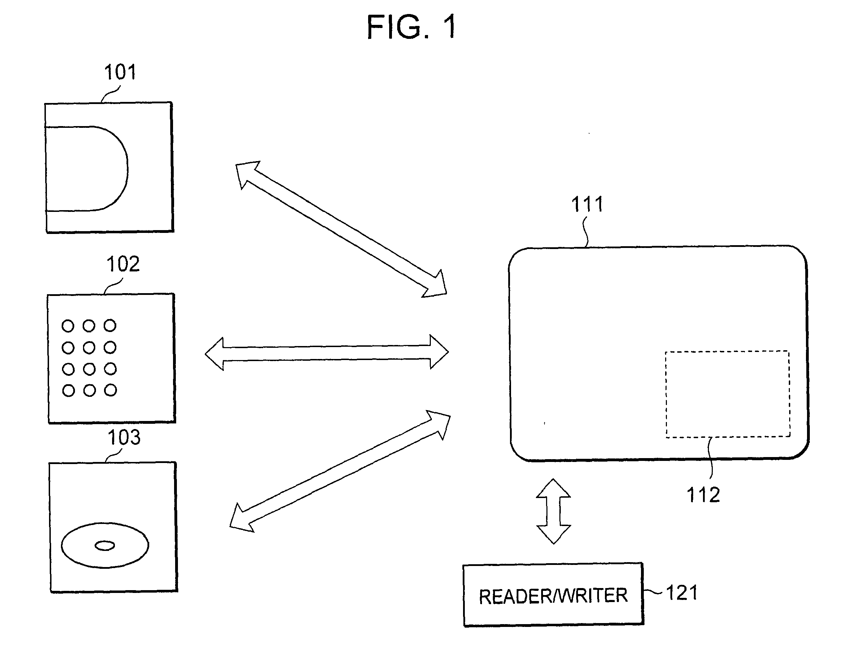

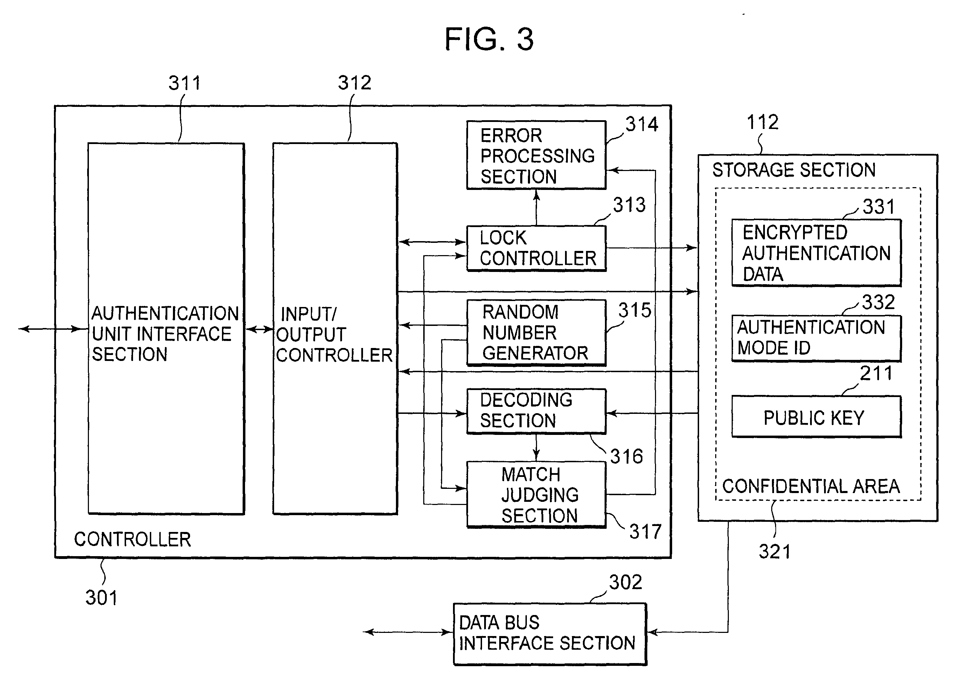

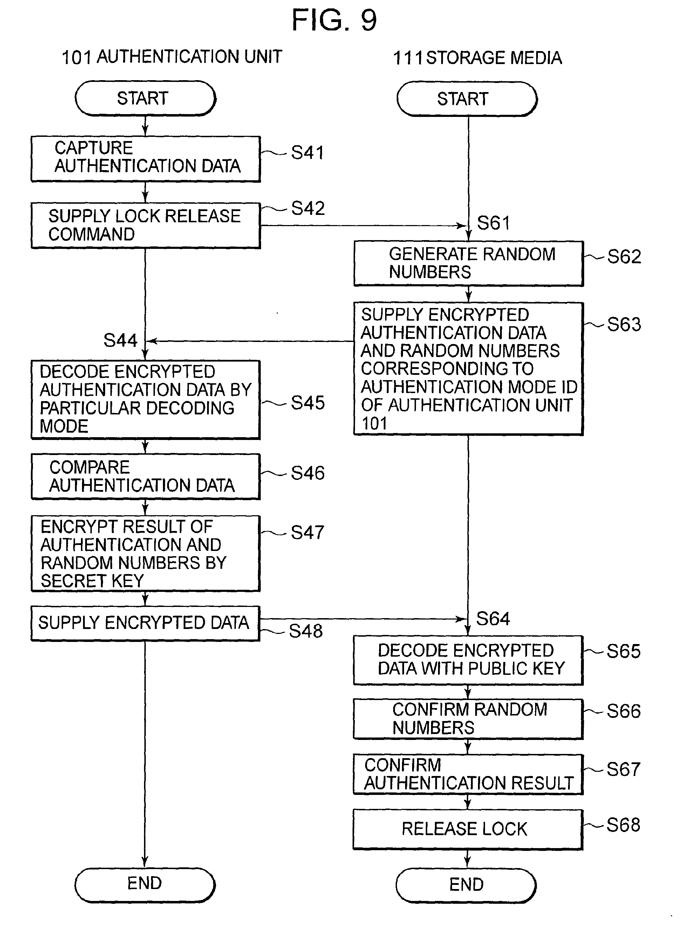

The first embodiment of the invention is concerned with an information processing apparatus (for example, a controller 301 in Fig. 3) limiting access to a storage medium (for example, a storage section 112 in Fig. 1) from outside. The apparatus includes unlock command obtaining means (for example, an input/output controller 312 in Fig. 3, performing the processing of step S61 in Fig. 9), authentication data supplying means (for example, an input/output controller 312 in Fig. 3, performing the processing of step S63 in Fig. 9), authentication result obtaining means (for example, the input/output controller 312 in Fig. 3, performing the processing of step S64 in Fig. 9), authentication result confirming means (for example, a match judging section 317 in Fig. 3, performing the processing of step S67 in Fig. 9) and release means (for example, a lock controller 313 in Fig. 3, performing the processing of step S68 in Fig. 9). The unlock command obtaining means is for obtaining, from an authentication unit (for example, an authentication unit 101 in Fig. 1) configured separately from the information processing apparatus, an unlock command requesting release of inhibition of access to the storage medium, and also an authentication mode ID (for example, an authentication mode ID 332 in Fig. 3) for identifying an authentication mode of the authentication unit. The authentication data supplying means is for supplying the authentication unit with authentication data used as sample data indicating a user is authorized in an authentication processing of a user instructing access to the storage medium, the authentication data (for example, encrypted authentication data 331 in Fig. 3) being corresponding to the authentication mode ID obtained together with the unlock command from the unlock command obtaining means. The authentication result obtaining means is for obtaining, from the authentication unit, an authentication result of the authentication processing performed by using the authentication data supplied from the authentication data supplying means. The authentication result confirming means is for confirming contents of the authentication result. The release means is for releasing inhibition of access to the storage medium from outside when, as a result of confirmation made by the authentication result confirming means, the user is authenticated as being authorized.

There may be further provided with random number generating means (for example, a random number generator 315 in Fig. 3, performing the processing of step S66 in Fig. 9) for generating a random number by a predetermined method. The authentication data supplying means may supply a random number generated by the random number generating means, together with the authentication data to the authentication unit (for example, step S63 in Fig. 9). The authentication result obtaining means may obtain the random number together with the authentication result from the authentication unit (for example, step S64 in Fig. 9). The authentication result confirming means may confirm whether the random number obtained from the authentication result obtaining means is matched with the random number generated by the random number generating means (for example, step S66 in Fig. 9).

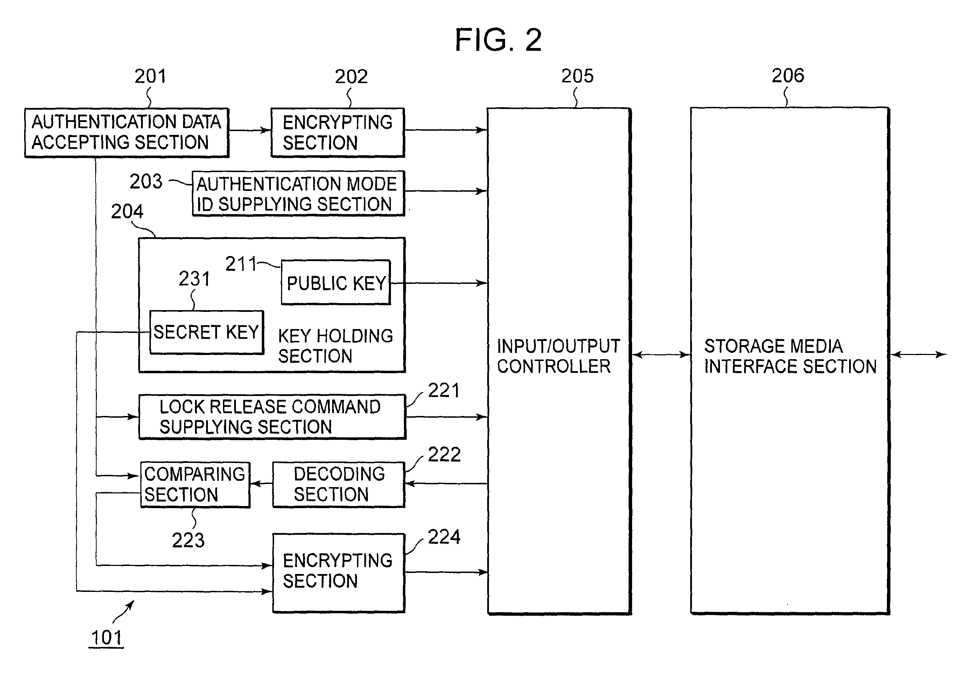

The authentication result obtained by the authentication result obtaining means is encrypted by a secret key (for example, a secret key 231 in Fig. 2) being predetermined electronic key information, in the authentication unit. There may be further provided with decoding means (for example, a decoding section 316 in Fig. 3, performing the processing of step S65 in Fig. 9) for decoding the authentication result by using a public key (for example, a public key 211 in Fig. 3) being electronic key information for publication corresponding to the secret key.

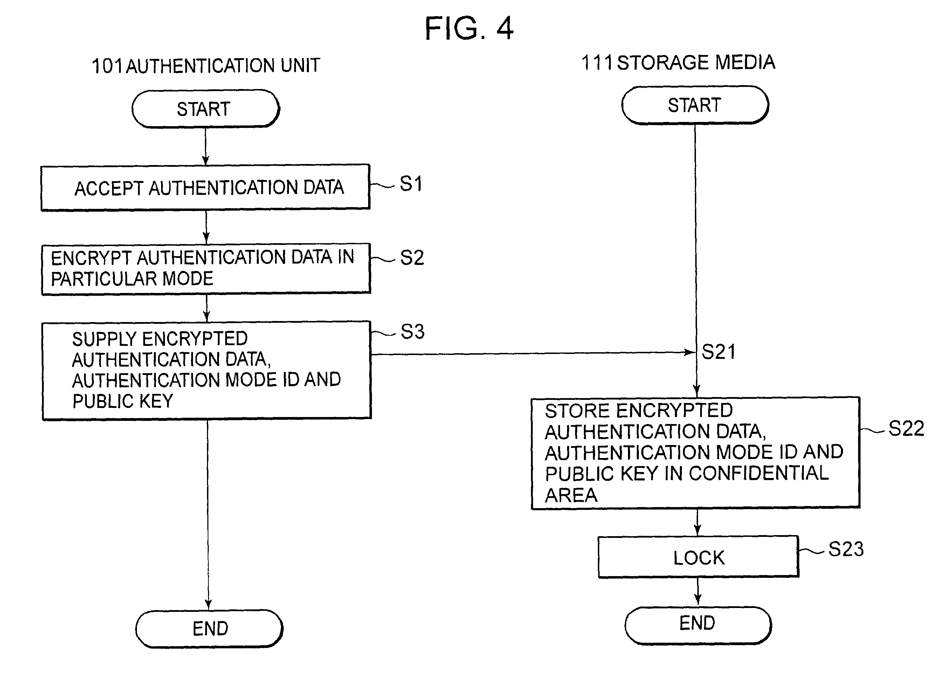

There may be further provided with storage control means (for example, the input/output controller 312 in Fig. 3 for performing the processing of step S22 in Fig. 4) for causing the storage medium to store information. The storage control means can cause a predetermined storage area (for example, a confidential area 321 in Fig. 3) in the storage medium to store the authentication data, the authentication mode ID and the public key.

The authentication data to be stored in the storage medium by the storage control means may be encrypted authentication data (for example, encrypted authentication data 331 in Fig. 3) encrypted by the authentication unit by a predetermined encryption mode.

There may be further provided with registration information obtaining means (for example, the input/output controller 312 in Fig. 3, performing the processing of step S21 in Fig. 4) for obtaining the encrypted authentication data, the authentication mode ID and the public key from the authentication unit, and inhibiting means (for example, a lock controller 313 in Fig. 3, performing the processing of step S23 in Fig. 4) for inhibiting access to the storage medium. The storage control means may cause the encrypted authentication data, the authentication mode ID and the public key obtained from the registration information obtaining means to be stored in the storage medium. The inhibiting means may inhibit access to the storage medium when the storage control means causes the encrypted authentication data, the authentication mode ID and the public key to be stored in the storage medium.

According to the first embodiment of the present invention, there is provided an information processing method of an information processing apparatus (for example, the controller 301 in Fig. 3) limiting access to a storage medium (for example, the storage section 112 in Fig. 1) from outside. The method includes the steps of: (i) obtaining, from an authentication unit (for example, the authentication unit 101 in Fig. 1) configured separately from the information processing apparatus, an unlock command as a command requesting release of inhibition of access to the storage medium, and also an authentication mode ID (for example, the authentication mode ID 332 in Fig. 3) for identifying an authentication mode of the authentication unit (for example, step S61 in Fig. 9); (ii) supplying the authentication unit with authentication data (for example, step S63 in Fig. 9) used as sample data indicating that a user instructing access to the storage medium is authorized in an authentication processing, the authentication data being corresponding to the authentication mode ID obtained together with the unlock command (for example, the encrypted authentication data 331 in Fig. 3); (iii) obtaining, from the authentication unit, an authentication result of the authentication processing performed by using the supplied authentication data (for example, step S64 in Fig. 9); (iv) confirming contents of the authentication result (for example, step S67 in Fig. 9); and (v) releasing inhibition of access to the storage medium from outside when, as a result of confirmation, the user is authenticated as being correct (for example, step S68 in Fig. 9).

According to the first embodiment of the present invention, there is also provided with a program causing a computer (for example, the controller 301 in Fig. 3) limiting access to a storage medium (for example, the storage section 112 in Fig. 1) from outside to execute information processing including the steps of: (i) obtaining, from an authentication unit (for example, the authentication unit 101 in Fig. 1) configured separately from the computer, a unlock command requesting release of inhibition of access to the storage medium, and also an authentication mode ID (for example, the authentication mode ID 332 in Fig. 3) for identifying an authentication mode of the authentication unit (for example, step S61 in Fig. 9); (ii) supplying the authentication unit (for example, step S63 in Fig. 9) with authentication data used as sample data indicating a user instructing access to the storage medium is authorized in an authentication processing, the authentication data being corresponding to the authentication mode ID obtained together with the unlock command (for example, the encrypted authentication data 331 in Fig. 3); (iii) obtaining, from the authentication unit, an authentication result of the authentication processing performed by using the supplied authentication data (for example, step S64 in Fig. 9); (iv) confirming contents of the authentication result (for example, step S67 in Fig. 9); and (v) releasing inhibition of access to the storage medium from outside when, as a result of confirmation, the user is authenticated as being correct (for example, step S68 in Fig. 9).

According to the second embodiment of the present invention, there is provided an information processing apparatus (for example, the controller 301 in Fig. 3) limiting access to a storage medium (for example, the storage section 112 in Fig. 1) from outside. The apparatus includes unlock command obtaining means (for example, the input/output controller 312 in Fig. 3, performing the processing of step S61 in Fig. 9), random number generating means (for example, the random number generator 315 in Fig. 3, performing the processing of step S62 in Fig. 9), authentication data supplying means (for example, the input/output controller 312 in Fig. 3, performing the processing of step S63 in Fig. 9), authentication result obtaining means (the input/output controller 312 in Fig. 3, performing the processing of step S64 in Fig. 9), confirming means (for example, the match judging section 317 in Fig. 3, performing the processing of step S66 and S67 in Fig. 9) and release means (for example, the lock controller 313 in Fig. 3, performing the processing of step S68 in Fig. 9). The unlock command obtaining means is for obtaining, from an authentication unit (for example, the authentication unit 101 in Fig. 1) configured separately from the information processing apparatus, an unlock command requesting release of inhibition of access to the storage medium. The random number generating means is for generating a random number by a predetermined method. The authentication data supplying means is for supplying the authentication unit with authentication data (for example, the encrypted authentication data 331 in Fig. 3) used as sample data indicating that a user instructing access to the storage medium is authorized, and the random number generated by the random number generating means. The authentication result obtaining means is for obtaining, from the authentication unit, an authentication result of the authentication processing performed by using the authentication data supplied from the authentication data supplying means, and the random number. The confirming means is for confirming contents of the authentication result and confirming whether the random number obtained by the authentication result obtaining means is identical in value with the random number generated by the random number generating means. The release means is for releasing inhibition of access to the storage medium from outside when, as a result of confirmation made by the confirming means, the two random numbers are identical in value and the user is authenticated as being correct.

The unlock command obtaining means may obtain authentication mode ID (for example, the authentication mode ID 332 in Fig. 3) for identifying an authentication mode of the authentication unit, together with the unlock command (for example, step S61 in Fig. 9). The authentication data supplying means may supply the authentication unit with authentication data corresponding to the authentication mode ID obtained together with the unlock command from the unlock command obtaining means, and the random number generated by the random number generating means (for example, step S63 in Fig. 9).

The authentication result obtained by the authentication result obtaining means may be encrypted by a secret key (for example, the secret key 231 in Fig. 2) being predetermined electronic key information, in the authentication unit. There may be further provided with decoding means (for example, the decoding section 316 in Fig. 3, performing the processing of step S65 in Fig. 9) for decoding the authentication result by using a public key (for example, the public key 211 in Fig. 3) being publicly available electronic key information corresponding to the secret key.

There may be further provided with storage control means (for example, the input/output controller 312 in Fig. 3, performing the processing of step S22 in Fig. 4) for causing the storage medium to store information. The storage control means can cause a predetermined storage area (for example, the confidential area 321 in Fig. 3) in the storage medium to store the authentication data, the authentication mode ID and the public key.

The authentication data stored in the storage medium by the storage control means may be encrypted authentication data (for example, the encrypted authentication data 331 in Fig. 3) encrypted by the authentication unit by a predetermined encryption mode.

There may be further provided with registration information obtaining means (for example, the input/output controller 312 in Fig. 3, performing the processing of step S21 in Fig. 4) for obtaining the encrypted authentication data, the authentication mode ID and the public key from the authentication unit, and inhibiting means (for example, the lock controller 313 in Fig. 3, performing the processing of step S23 in Fig. 4) for inhibiting access to the storage medium. The storage control means may cause the encrypted authentication data, the authentication mode ID and the public key obtained from the registration information obtaining means to be stored in the storage medium. The inhibiting means may inhibit access to the storage medium when the storage control means causes the encrypted authentication data, the authentication mode ID and the public key to be stored in the storage medium.

According to the second embodiment of the present invention, there is also provided an information processing method of an information processing apparatus (for example, the controller 301 in Fig. 3) limiting access to a storage medium (for example, the storage section 112 in Fig. 1) from outside. The method includes the steps of: (i) obtaining, from an authentication unit (for example, the authentication unit 101 in Fig. 1) configured separately from the information processing apparatus, an unlock command requesting release of inhibition of access to the storage medium (for example, step S61 in Fig. 9); (ii) generating a random number by a predetermined method (for example, step S62 in Fig. 9); (iii) supplying the authentication unit with authentication data (for example, the encrypted authentication data 331 in Fig. 3) used as sample data indicating that a user instructing access to the storage medium is authorized in an authentication processing, and the generated random number (for example, step S63 in Fig. 9); (iv) obtaining, from the authentication unit, an authentication result of the authentication processing performed by using the supplied authentication data, and a random number (for example, step S64 in Fig. 9); (v) confirming contents of the authentication result, and confirming whether the obtained random number and the generated random number are identical in value (for example, step S66 and step S67 in Fig. 9); and (vi) releasing inhibition of access to the storage medium from outside when, as a result of confirmation, the two random numbers are identical in value, and the user is authenticated as being correct (for example, step S68 in Fig. 9).

According to the second embodiment of the present invention, there is also provided a program causing a computer (for example, the controller 301 in Fig. 3) limiting access to a storage medium (for example, the storage section 112 in Fig. 1) from outside to execute information processing including the steps of: (i) obtaining, from an authentication unit (for example, the authentication unit 101 in Fig. 1) configured separately from the information processing apparatus, an unlock command requesting release of inhibition of access to the storage medium (for example, step S61 in Fig. 9); (ii) generating a random number by a predetermined method (for example, step S62 in Fig. 9); (iii) supplying the authentication unit with authentication data (for example, the encrypted authentication data 331 in Fig. 3) used as sample data indicating that a user instructing access to the storage medium is authorized in an authentication processing, and the generated random number (for example, step S63 in Fig. 9); (iv) obtaining, from the authentication unit, an authentication result of the authentication processing performed by using the supplied authentication data and a random number (for example, step S64 in Fig. 9); (v) confirming contents of the authentication result, and confirming whether the obtained random number and the generated random number are identical in value (for example, step S66 and step S67 in Fig. 9); and (vi) releasing inhibition of access to the storage medium from outside when, as a result of confirmation, the two random numbers are identical in value, and the user is authenticated as being correct (for example, step S68 in Fig. 9).

According to the third embodiment of the present invention, there is provided an information processing apparatus (for example, the authentication unit 101 in Fig. 1) for authenticating a user performing an instruction for access to a storage medium (for example, the storage section 112 in Fig. 1) to which access from outside is limited. The apparatus includes authentication data accepting means (for example, an authentication data accepting section 201 in Fig. 2, performing the processing of step S41 in Fig. 9), unlock command supplying means (for example, an input/output controller 205 in Fig. 2, performing the processing of step S42 in Fig. 9), authentication data obtaining means (for example, the input/output controller 205 in Fig. 2, performing the processing of step S44 in Fig. 9), authentication means (for example, a comparing section 223 in Fig. 2, performing the processing of step S46 in Fig. 9) and authentication result supplying means (for example, the input/output controller 205 in Fig. 2, performing the processing of step S48 in Fig. 9). The authentication data accepting means is for accepting authentication data inputted by the user for the user authentication. The unlock command supplying means is for supplying an unlock command requesting release of inhibition of access to the storage medium, and an authentication mode ID (for example, the authentication mode ID 332 in Fig. 3) for identifying an authentication mode of the user authentication performed in the information processing apparatus, to an input/output controller (for example, the controller 301 in Fig. 3) which is configured separately from the information processing apparatus and limits access to the storage medium. The authentication data obtaining means is for obtaining, from the input/output controller, authentication data (for example, the encrypted authentication 331 in Fig. 3) used as sample data indicating that a user is authorized, the authentication data being corresponding to the authentication mode ID supplied together with the unlock command from the unlock command supplying means. The authentication means is for authenticating the user by comparing the authentication data accepted by the authentication data accepting means, with the authentication data obtained by the authentication data obtaining means. The authentication result supplying means is for supplying an authentication result of the user authentication performed by the authentication means, to the input/output controller.

The authentication data obtained by the authentication data obtaining means is encrypted authentication data (for example, the encrypted authentication data 331 in Fig. 3) encrypted by a predetermined encryption mode. There may be further provided with decoding means (for example, the decoding section 222 in Fig. 2, performing the processing of step S45 in Fig. 9) for decoding the encrypted authentication data by a decoding mode corresponding to the predetermined encryption mode.

In the authentication data obtaining means, a predetermined random number together with the authentication data may be obtained (for example, step S44 in Fig. 9). The authentication result supplying means may supply the random number obtained by the authentication data obtaining means together with the authentication result (for example, step S48 in Fig. 9).

There may be further provided with key holding means (for example, a key holding section 204 in Fig. 2) for holding a secret key (for example, the secret key 231 in Fig. 2) being predetermined electronic key information, and authentication result encrypting means (for example, an encrypting section 224 in Fig. 2, performing the processing of step S47 in Fig. 9) for encrypting the authentication result by using the secret key held by the key holding means.

The key holding means may hold a public key (for example, the public key 211 in Fig. 3) being publicly available electronic key information corresponding to the secret key. There may be further provided with authentication data encrypting means (for example, an encrypting section 202 in Fig. 2, performing the processing of step S2 in Fig. 4) and lock command supplying means (for example, the input/output controller 205 in Fig. 2, performing the processing of step S3 in Fig. 4). The authentication data encrypting means is for encrypting the authentication data accepted by the authentication data accepting means by a predetermined encryption mode. The lock command supplying means is for supplying the input/output controller with encrypted authentication data obtained by the authentication data encrypting means, the authentication mode ID and the public key held by the key holding means, together with a lock command requesting inhibition of access to the storage medium.

According to the third embodiment of the present invention, there is also provided an information processing method of an information processing apparatus (for example the authentication unit 101 in Fig. 1) for authenticating a user performing an instruction for access to a storage medium (for example, the storage section 112 in Fig. 1) to which access from outside is limited. The method includes the steps of: (i) accepting authentication data inputted by the user for the user authentication (for example, step S41 in Fig. 9); (ii) supplying an unlock command requesting release of inhibition of access to the storage medium, and an authentication mode ID (for example, the authentication mode ID 332 in Fig. 3) for identifying an authentication mode of the user authentication performed in the information processing apparatus, to an input/output controller (for example, the controller 301 in Fig. 3) which is configured separately from the information processing apparatus and limits access to the storage medium (for example, step S42 in Fig. 9); (iii) obtaining, from the input/output controller, authentication data (for example, the encrypted authentication data 331 in Fig. 3) used as sample data indicating that a user is authorized, the authentication data being corresponding to the authentication mode ID supplied together with the unlock command (for example, step S44 in Fig. 9); (iv) authenticating the user by comparing the accepted authentication data with the obtained authentication data (for example, step S46 in Fig. 9); and (v) supplying an authentication result of the user authentication to the input/output controller (for example, step S48 in Fig. 9).

According to the third embodiment of the present invention, there is also provided a program for causing a computer authenticating a user performing an instruction for access to a storage medium (for example, the storage section 112 in Fig. 1) to which access from outside is limited, to perform information processing including the steps of: (i) accepting authentication data inputted by the user for the user authentication (for example, step S41 in Fig. 9); (ii) supplying an unlock command requesting release of inhibition of access to the storage medium, and an authentication mode ID (for example, the authentication mode ID 332 in Fig. 3) for identifying an authentication mode of the user authentication performed in the information processing apparatus, to an input/output controller (for example, the controller 301 in Fig. 3) which is configured separately from the information processing apparatus and limits access to the storage medium (for example, step S42 in Fig. 9); (iii) obtaining, from the input/output controller, authentication data (for example, the encrypted authentication data 331 in Fig. 3) used as sample data indicating that a user is authorized, the authentication data being corresponding to the authentication mode ID supplied together with the unlock command (for example, step S44 in Fig. 9); (iv) authenticating the user by comparing the accepted authentication data with the obtained authentication data (for example, step S46 in Fig. 9); and (v) supplying an authentication result of the user authentication to the input/output controller (for example, step S48 in Fig. 9).

According to the fourth embodiment of the present invention, there is provided an information processing apparatus (for example, the authentication unit 101 in Fig. 1) for authenticating a user performing an instruction for access to a storage medium (for example, the storage section 112 in Fig. 1) to which access from outside is limited. The apparatus includes authentication data accepting means (for example, the authentication data accepting section 201 in Fig. 2, performing the processing of step S41 in Fig. 9), unlock command supplying means (for example, the input/output controller 205 in Fig. 2, performing the processing of step S42 in Fig. 9), authentication data obtaining means (for example, the input/output controller 205 in Fig. 2, performing the processing of step S44 in Fig. 9), authentication means (for example, the comparing section 223 in Fig. 2, performing the processing of step S46 in Fig. 9) and authentication result supplying means (for example, the input/output controller 205 in Fig. 2, performing the processing of step S48 in Fig. 9). The authentication data accepting means is for accepting authentication data inputted by the user for the user authentication. The unlock command supplying means is for supplying an unlock command requesting release of inhibition of access to the storage medium, to an input/output controller (for example, the controller 301 in Fig. 3) which is configured separately from the information processing apparatus and limits access to the storage medium. The authentication data obtaining means is for obtaining, from the input/output controller, authentication data (for example, the encrypted authentication data 331 in Fig. 3) used as sample data indicating that a user is authorized, and a predetermined random number. The authentication means is for authenticating the user by comparing the authentication data accepted by the authentication data accepting means, with the authentication data obtained by the authentication data obtaining means. The authentication result supplying means is for supplying the input/output controller with an authentication result of the user authentication performed by the authentication means, together with the random number obtained from the authentication data obtaining means.

The authentication data obtained by the authentication data obtaining means is encrypted authentication data (for example, the encrypted authentication data 331 in Fig. 3) encrypted by a predetermined encryption mode. There may be further provided with decoding means (for example, the decoding section 222 in Fig. 2, performing the processing of step S45 in Fig. 9) for decoding the encrypted authentication data by a decoding mode corresponding to the predetermined encryption mode.

The unlock command supplying means may supply the input/output controller with an authentication mode ID (for example, the authentication mode ID 332 in Fig. 3) for identifying an authentication mode of the user authentication performed in the information processing apparatus, together with the unlock command.

There may be further provided with key holding means (for example, the key holding section 204 in Fig. 2) for holding a secret key (for example, the secret key 231 in Fig. 2) being predetermined electronic key information, and authentication result encrypting means (for example, the encrypting section 224 in Fig. 2, performing the processing of step S47 in Fig. 9) for encrypting the authentication result by using the secret key held by the key holding means.

The key holding means holds a public key (for example, the public key 211 in Fig. 3) being made available to public electronic key information corresponding to the secret key. There may be further provided with authentication data encrypting means (for example, the encrypting section 202 in Fig. 2, performing the processing of step S2 in Fig. 4) and lock command supplying means (for example, the input/output controller 205 in Fig. 2, performing the processing of step S3 in Fig. 4). The authentication data encrypting means is for encrypting the authentication data accepted by the authentication data accepting means by a predetermined encryption mode. The lock command supplying means is for supplying the input/output controller with encrypted authentication data obtained by the authentication data encrypting means, and the public key held by the key holding means, together with a lock command for requesting inhibition of access to the storage medium.

According to the fourth embodiment of the present invention, there is also provided an information processing method of an information processing apparatus (for example, the authentication unit 101 in Fig. 1) for authenticating a user performing an instruction for access to a storage medium (for example, the storage section 112 in Fig. 1) to which access from outside is limited. The method includes the steps of: (i) accepting authentication data inputted by the user for the user authentication (for example, step S41 in Fig. 9); (ii) supplying an unlock command requesting release of inhibition of access to the storage medium, to an input/output controller (for example, the controller 301 in Fig. 3) which is configured separately from the information processing apparatus and limits access to the storage medium (for example, step S42 in Fig. 9); (iii) obtaining, from the input/output controller, authentication data (for example, the encrypted authentication data 331 in Fig. 3) used as sample data indicating that a user is authorized, and a predetermined random number (for example, step S44 in Fig. 9); (iv) authenticating the user by comparing the accepted authentication data with the obtained authentication data (for example, step S46 in Fig. 9); and (v) supplying the input/output controller with an authentication result of the user authentication, together with the obtained random number (for example, step S48 in Fig. 9).

According to the fourth embodiment of the present invention, there is provided a program for causing a computer (for example, the authentication unit 101 in Fig. 1) authenticating a user performing an instruction for access to a storage medium (for example, the storage section 112 in Fig. 1) to which access from outside is limited, to perform information processing including the steps of: (i) accepting authentication data inputted by the user for the user authentication (for example step S41 in Fig. 9); (ii) supplying an unlock command requesting release of inhibition of access to the storage medium, to an input/output controller (for example, the controller 301 in Fig. 3) which is configured separately from the information processing apparatus and limits access to the storage medium (for example, step S42 in Fig. 9); (iii) obtaining, from the input/output controller, authentication data (for example, the encrypted authentication data 331 in Fig. 3) used as sample data indicating that a user is authorized, and a predetermined random number (for example, step S44 in Fig. 9); (iv) authenticating the user by comparing the accepted authentication data with the obtained authentication data (for example, step S46 in Fig. 9); and (v) supplying an authentication result of the user authentication and the obtained random number to the input/output controller (for example step S48 in Fig. 9).

According to the fifth embodiment of the present invention, there is provided an information processing system including an input/output controller (for example, the controller 301 in Fig. 3) for limiting access to a storage medium (for example, the storage section 112 in Fig. 1) from outside, and an authentication unit (for example, the authentication unit 101 in Fig. 1) which is configured separately from the input/output controller, and authenticates a user performing an instruction for access to the storage medium. The input/output controller includes unlock command obtaining means (for example, the input/output controller 312 in Fig. 3, performing the processing of step S61 in Fig. 9), authentication data supplying means (for example, the input/output controller 312 in Fig. 3, performing the processing of step S63 in Fig. 9), authentication result obtaining means (for example, the input/output controller 312 in Fig. 3, performing the processing of step S64 in Fig. 9), authentication result confirming means (for example, the match judging section 317 in Fig. 3, performing the processing of step S67 in Fig. 9) and release means (for example, the lock controller 313 in Fig. 3, performing the processing of step S68 in Fig. 9). The unlock command obtaining means is for obtaining, from the authentication unit, an unlock command requesting release of inhibition of access to the storage medium, and also an authentication mode ID (for example, the authentication mode ID 332 in Fig. 3) for identifying an authentication mode of the authentication unit. The authentication data supplying means is for supplying the authentication unit with authentication data (for example, the encrypted authentication data 331 in Fig. 3) used as sample data indicating that a user is authorized in the user authentication, the authentication data being torresponding to the authentication mode ID obtained together with the unlock command from the unlock command obtaining means. The authentication result obtaining means is for obtaining, from the authentication unit, an authentication result of a user obtained by using the authentication data supplied from the authentication data supplying means. The authentication result confirming means is for confirming contents of the authentication result. The release means is for releasing inhibition of access to the storage medium from outside when, as a result of confirmation by the authentication result confirming means, the user is authenticated as being correct. The authentication unit includes authentication data accepting means (for example, the authentication data accepting section 201 in Fig. 2, performing the processing of step S41 in Fig. 9), unlock command supplying means (for example, the input/output controller 205 in Fig. 2, performing the processing of step S42 in Fig. 9), authentication data obtaining means (for example, the input/output controller 205 in Fig. 2, performing the processing of step S44 in Fig. 9), authentication means (for example, the comparing section 223 in Fig. 2, performing the processing of step S46 in Fig. 9) and authentication result supplying means (for example, the input/output controller 205 in Fig. 2, performing the processing of step S48 in Fig. 9). The authentication data accepting means is for accepting authentication data inputted by the user for the user authentication. The unlock command supplying means is for supplying the unlock command and the authentication mode ID to the input/output controller. The authentication data obtaining means is for obtaining, from the input/output controller, authentication data corresponding to the authentication mode ID supplied together with the unlock command from the unlock command supplying means. The authentication means is for authenticating the user by comparing the authentication data accepted by the authentication data accepting means, with the authentication data obtained by the authentication data obtaining means. The authentication result supplying means is for supplying an authentication result of the user authentication performed by the authentication means, to the input/output controller.

According to the sixth embodiment of the present invention, there is provided an information processing system including an input/output controller (for example, the controller 301 in Fig. 3) for limiting access to a storage medium (for example, the storage section 112 in Fig. 1) from outside, and an authentication unit (for example, the authentication unit 101 in Fig. 1) which is configured separately from the input/output controller, and authenticates a user performing an instruction for access to the storage medium. The input/output controller includes unlock command obtaining means (for example, the input/output controller 312 in Fig. 3, performing the processing of step 61 in Fig. 9), random number generating means (for example, the random number generator 315 in Fig. 3, performing the processing of step S62 in Fig. 9), authentication data supplying means (for example, the input/output controller 312 in Fig. 3, performing the processing of step S63 in Fig. 9), authentication result obtaining means (for example, the input/output controller 312 in Fig. 3, performing the processing of step S64 in Fig. 9), confirming means (for example, the match judging section 317 in Fig. 3, performing the processing of step S66 and S67 in Fig. 9) and release means (for example, the lock controller 313 in Fig. 3, performing the processing of step S68 in Fig. 9). The unlock command obtaining means is for obtaining, from the authentication unit, an unlock command requesting release of inhibition of access to the storage medium. The random number generating means is for generating a random number by a predetermined method. The authentication data supplying means is for supplying the authentication unit with authentication data (for example, the encrypted authentication data 331 in Fig. 3) used as sample data indicating that a user is authorized in the user authentication, and the random number generated by the random number generating means. The authentication result obtaining means is for obtaining, from the authentication unit, an authentication result of a user obtained by using the authentication data supplied from the authentication data supplying means, and a random number. The confirming means is for confirming contents of the authentication result and confirming whether the random number obtained by the authentication result obtaining means is identical in value with the random number generated by the random number generating means. The release means is for releasing inhibition of access to the storage medium from outside when, as a result of confirmation made by the confirming means, the two random numbers are identical in value and the user is authenticated as being correct. The authentication unit includes authentication data accepting means (for example, the authentication data accepting section 201 in Fig. 2, performing the processing of step S41 in Fig. 9), unlock command supplying means (for example, the input/output controller 205 in Fig. 2, performing the processing of step S42 in Fig. 9), authentication data obtaining means (for example, the input/output controller 205 in Fig. 2, performing the processing of step S44 in Fig. 9), authentication means (for example, the comparing section 223 in Fig. 2, performing the processing of step S46 in Fig. 9) and authentication result supplying means (for example, the input/output controller 205 in Fig. 2, performing the processing of step S48 in Fig. 9). The authentication data accepting means is for accepting authentication data inputted by the user for the user authentication. The unlock command supplying means is for supplying the unlock command to the input/output controller. The authentication data obtaining means is for obtaining, from the input/output controller, the authentication data and the random number. The authentication means is for authenticating the user by comparing the authentication data accepted by the authentication data accepting means, with the authentication data obtained by the authentication data obtaining means. The authentication result supplying means is for supplying the input/output controller with an authentication result of the user authentication performed by the authentication means, and the random number obtained by the authentication data obtaining means.

Embodiments of the present invention will be described below.

Fig. 1 is a diagram showing an example of the configuration of a control system for controlling input/output of data in a storage medium to which an embodiment of the present invention is applied. The control system is a system in which an authentication unit 101, an authentication unit 102, or an authentication unit 103 is used to control the data input/output performed by a reader/writer 121 to a storage section 112 housed in the storage media 111 which is configured separately from the three units.

The authentication unit 101 has a mechanism for detecting a user's fingerprint pattern, and employs a fingerprint authentication mode in which the detected fingerprint pattern is used as user authentication data. The authentication unit 102 has, for example, a keyboard or the like, and employs a password authentication mode in which the inputted password is used as user authentication data. The authentication unit 103 has, for example, a CCD camera or the like for taking data of an iris, and employs an iris authentication mode in which the captured iris data is used as user authentication data.

The storage media 111 houses a storage section 112 including a flash memory, etc., and stores various kinds of information. The reader/writer 121 is adapted to be able to communicate with the storage media 111 in a predetermined state. In the communicable state, the reader/writer 121 reads the data stored in the storage section 112, and writes data in the storage section 112. As used herein, the "data" indicate the entire information stored in the storage section 112, and include programs or the like not executed in the storage media 111, the authentication unit 101 and the like.

The storage media 111 has two modes of permission (unlock) and inhibition (lock). When the storage media 111 is in the permission (unlock) state, the reader/writer 121 can access to the storage section 112 to read data from the storage section 112, or write data to the storage section 112. On the other hand, when the storage media 111 is in the inhibition (lock) state, the reader/writer 121 has difficulty in accessing to the storage section 112 to read data from the storage section 112, or write data to the storage section 112.

The authentication units 101 to 103 are adapted to be able to communicate with the storage media 111 under certain states. Their respective authentication techniques are used to limit access to the storage section 112 in the storage media 111 from the reader/writer 121. Only when the user is authenticated by these authentication units, namely only when the authorized user consents, the storage media 111 permits the access of the reader/writer 121 to the storage section 112.

Although details will be described later, authentication data used for collation are stored (registered) in the storage section 112 of the storage media 111 where the access from the reader/writer 121 is inhibited. When the storage media 111 is brought into a communicable state with authentication units by, for example, connecting therebetween, the storage media 111 supplies, in response to the request from the authentication unit, the stored authentication data to the authentication unit. The authentication unit performs user authentication by comparing authentication data inputted by the user, with the authentication data obtained from the storage media 111. The authentication result is supplied to the storage media 111, and if the user is authenticated as being correct, the access of the reader/writer 121 to the storage section 112 is permitted (unlocked).

Therefore, this enables the storage media 111 to use any of the authentication units 101 to 103, irrespective of the authentication mode. That is, the storage media 111 is applicable to any of authentication mode, such as followings; in addition to the fingerprint authentication and the password authentication, iris authentication as an authentication mode to perform personal identity verification by identifying a wrinkle pattern appeared in the pupil of an eyeball, vein authentication as an authentication mode to perform personal identity verification by the vein pattern of a palm or a fingertip, contour authentication as an authentication mode to perform personal identity verification by a face contour shape, voiceprint authentication as an authentication mode to perform personal identity verification by voice characteristics, deoxyribonucleic acid (DNA) authentication as an authentication mode to perform personal identity verification by the base sequence of DNA, one-time password authentication as an authentication mode to perform personal identity verification by use of a password changed each time it is used, electronic authentication as an authentication mode to perform personal identity verification by using a verification by another person, and hardware key as an authentication mode to perform personal identity verification by using a device. The authentication units 101 to 103 in Fig. 1 are given only as examples, and the storage media 111 can perform a user authentication as above even with authentication units other than the above units.

The communication mode between the respective authentication units and the storage media 111 is arbitrary. For example, the storage media 111 may be mounted to a slot for the storage media provided in the authentication unit in a communicable manner, or alternatively connected to the authentication units via wired cable in a communicable manner. In this case, the storage media 111 makes communication with the authentication unit through a wired bus, such as Peripheral Components Interconnect Express Bus (PCIExpress), Universal Serial Bus (USB), or Institute of Electrical and Electronic Engineers (IEEE) 1394, or through a network, such as LAN (Local Area Network). Also, the storage media 111 and the respective authentication units may have a short distance wireless communication function such as IEEE802-.11x, Radio Frequency (RF) or Bluetooth, or an infrared-ray communication function, such as Infrared Data Association-(IrDA) to make radio communication or infrared-ray communication in a state in which both are located within mutually communicable range.

Similarly, the communication mode between the storage media 111 and the reader/writer 121 is arbitral. For example, the storage media 111 may be mounted to a slot for the storage media provided in the reader/writer 121 in a communicable manner, or alternatively connected through a wired cable to the reader/writer 121 in a communicable manner. In this case, the storage media 111 makes communication with the reader/writer 121 through a wired bus such as PCIExpress, USB or IEEE 1394, or through a network such as LAN. Alternatively, the storage media 111 and the reader/writer 121 may have a short distance wireless communication function, such as IEEE802.11x, RF or Bluetooth, or an infrared-ray communication function such as IrDA to make wireless communication or infrared-ray communication in a state where both are positioned within a mutually communicable range.

Although the authentication units and the reader/writer 121 may be configured integrally, the storage media 111 is configured separately from them. When the authentication units and the reader/writer 121 are configured integrally, a bus for connecting the authentication units and the storage media 111 may be identical (common) with a bus for connecting the reader/writer 121 and the storage media 111, but their communications are independent each other. Further, in the control system shown in Fig. 1, the numbers of the authentication unit 101, the storage media 111 and the reader/writer 121 are arbitrary.

The configuration examples of the respective devices will be described below. In the following, the authentication unit 101 will be described mainly, and description of the authentication units 102 and 103 will be omitted other than when necessary.

Fig. 2 is a block diagram showing an example of the internal configuration of the authentication unit 101.

In Fig. 2, the authentication unit 101 includes an authentication data accepting section 201, an encrypting section 202, an authentication mode ID supplying section 203, a key holding section 204, an input/output controller 205, a storage media interface section 206, an unlock command supplying section 221, a decoding section 222, a comparing section 223 and an encrypting section 224.

The authentication data accepting section 201 detects the user's fingerprint pattern to form data thereof. When authentication data are registered in the storage media 111 and an access limitation is started, the authentication data accepting section 201 supplies the obtained fingerprint pattern data to the encrypting section 202 as authentication data. When the access to the storage section 112 is permitted (unlocked), the authentication data accepting section 201 supplies the obtained fingerprint pattern data to the comparing section 223 as authentication data, and also notifies to the unlock command supplying section 221 that the authentication data are generated by detecting the user's fingerprint pattern.

In order to reduce a risk of the authentication data leaks when communication is made or when data are stored in the storage media 111, the encrypting section 202 generates encrypted authentication data by encrypting in a particular mode the authentication data accepted by the authentication data accepting section 201.

Although the encryption mode is arbitrary, the use of an untypical and dedicated authentication mode can further reduce the risk of the authentication data leaks. However, by using a common authentication mode (the authentication key) between the authentication units of identical authentication mode to be used in the control system to which an embodiment of the present invention is applied, the storage media 111 becomes possible to perform user authentication even in any authentication unit other than the authentication unit in which the user's authentication data are registered. This improves convenience.

The authentication section 202 supplies the encrypted authentication data obtained by encrypting the authentication data, to the input/output controller 205.

The authentication mode ID supplying section 203 supplies the authentication mode ID for identifying the authentication mode employed by the authentication unit. That is, the authentication mode ID supplying section 203 holds an authentication mode ID indicating the fingerprint authentication, and supplies the authentication mode ID to the input/output controller 205 where necessary.

The key holding section 204 holds a public key 211 as predetermined electronic key data to be supplied to other device, and a secret key 231 corresponding to the public key 211, and supplies the public key 211 to the input/output controller 205 where necessary.

The input/output controller 205 controls sending and receiving of information between the authentication unit 101 and the storage media 111. When the encrypted authentication data are supplied from the encrypting section 202, the input/output controller 205 obtains the authentication mode ID from the authentication mode ID supplying section 203, and also obtains the public key 211 from the key holding section 204. The input/output controller 205 then supplies the encrypted authentication data, the authentication mode ID and the public key 211 to the storage media 111 through the storage media interface section 206. The input/output controller 205 also supplies the unlock command supplied from the unlock command supplying section 221, through the storage media interface section 206 to the storage media 111. Further, the input/output controller 205 supplies the decoding section 222 with the authentication data and the random number supplied from the storage media 111, which have been obtained through the storage media interface section 206. The input/output controller 205 also supplies the encrypted data supplied from the encrypting section 224, through the storage media interface section 206 to the storage media 111.

The storage media interface section 206 is the interface for the storage media 111, and makes communication with the storage media 111 by a predetermined communication mode to supply data sent from the storage media 111 to the input/output controller 205, and supply data sent from the input/output controller 205 to the storage media 111.

The unlock command supplying section 221 supplies an unlock command through the input/output controller 205 to the storage media 111, upon being notified by the authentication data accepting section 201 that the authentication data are generated by detecting the user's fingerprint pattern.

Upon receipt of the encrypted authentication data and the random number supplied from the storage media 111 through the input/output controller 205, the decoding section 222 decodes the encrypted authentication data by a particular decoding mode corresponding to the encryption mode of the encrypting section 202, thereby obtaining plain-text authentication data. The decoding section 222 supplies the authentication data and the random number to the comparing section 223.

The comparing section 223 compares the authentication data supplied from the authentication data accepting section 201, with the authentication data supplied from the decoding section 222, and judges whether these data are matched. The comparing section 223 then supplies the encrypting section 224 with the judgment result as an authentication result, together with the random number. The encrypting section 224 encrypts the authentication result and the random number supplied from the comparing section 223 by using the secret key 231 supplied from the key holding section 204, in order to safely supply them to the storage media 111 without being leaked to other persons. The encrypting section 224 then supplies the obtained encrypted data through the input/output controller 205 to the storage media 111.

The authentication units 102 and 103 have the same configuration as that of the authentication unit 101 shown in Fig. 2, except difference in data to be accepted by the authentication data accepting section 201, authentication data to be generated from the accepted data, and value of an authentication mode ID supplied by the authentication mode ID supplying section 203. That is, the authentication units, to which an embodiment of the present invention is applied, have the same configuration as that shown in Fig. 2, irrespective of the authentication mode.

An example of the configuration of the storage media 111 will be described below. Fig. 3 is a block diagram showing an example of the internal configuration of the storage media 111. Description will be made by explaining the authentication unit 101 performing authentication processing. Descriptions made below are basically applied to cases where an authentication unit other than the authentication unit 101 performs authentication, because authentication does not depend on the authentication mode.

As shown in Fig. 3, the storage media 111 includes, besides the storage section 112, a controller 301 for permitting and inhibiting access to the storage section 112 from the reader/writer 121, and a data bus interface section 302 as the interface for the reader/writer 121.

The controller 301 includes an authentication unit interface section 311, an input/output controller 312, a lock controller 313, an error processing section 314, a random number generator 315, a decoding section 316 and a match judging section 317. The authentication unit interface section 311 is the interface for the authentication unit 101, and makes communication with the authentication unit 101 by a predetermined communication mode, supplies data sent from the authentication unit 101 to the data input/output controller 312, and supplies data sent from the input/output controller 312 to the authentication unit 101.

The input/output controller 312 controls sending and receiving of data between the authentication unit 101 and the storage media 111. The input/output controller 312 supplies the storage section 112 with the encrypted authentication data, the authentication mode ID and the public key 211 supplied from the authentication unit 101, which are obtained through the authentication unit interface section 311, and then causes a confidential area 321 to store these data. The input/output controller 312 also notifies the lock controller 313 that the encrypted authentication data are stored in the storage section 112.

When the input/output controller 312 obtains the unlock command supplied from the authentication unit 101 through the authentication interface section 311, the input/output controller 312 notifies the above information to the lock controller 313, confirms that the access to the storage section 112 from the reader/writer 121 is inhibited (locked), and causes the random number generator 315 to generate a random number. Further, when encrypted authentication data corresponding to the supplied authentication mode ID are obtained from the storage section 112, the input/output controller 312 supplies the encrypted authentication data and the random number through the authentication unit interface section 311 to the authentication unit 101. The input/output controller 312 also supplies the decoding section 316 with the encrypted data supplied from the authentication unit 101, which are obtained through the authentication unit interface section 311.

The lock controller 313 inhibits (locks) the access to the storage section 112 from the reader/writer 121, and releases (unlocks) the inhibition. For example, the lock controller 313 inhibits (locks) the access to the storage section 112 from the reader/writer 121 upon being notified by the input/output controller 312 that the encrypted authentication data, the authentication mode ID and the public key 211 are stored together with the lock command. If the access to the storage section 112 from the reader/writer 121 is currently inhibited (locked), the lock controller 313 notifies the information to the input/output controller 312 upon being notified by the input/output controller 312 that the unlock command is obtained. For example, if the access to the storage section 112 from the reader/writer 121 is not inhibited due to the non-registration of the encrypted authentication data or release (unlock) of the lock, the lock controller 313 notifies this information to the error processing section 314 to causes the section to execute error processing. Further, the lock controller 313 also releases (unlocks) the inhibition of input/output of information to/from the storage section 112 when the authentication data are matched based on the judge result of the match judging section 317.

The error processing section 314 performs error processing based on the error judgment in the lock controller 313 or the match judging section 317. The random number generator 315 generates a random number used as a session ID for identifying the communication with the authentication unit 101, and supplies them to the input/output controller 312 and the match judging section 317. When the encrypted data supplied from the authentication unit 101 are supplied from the input/output controller 312, the decoding section 316 obtains a public key 211 from the storage section 112, and decodes the encrypted data by using the public key 211. The decoding section 316 supplies the authentication result as the result of the decoding, and the random number to the match judging section 317. The match judging section 317 compares the random number supplied from the decoding section 316, and the random number supplied from the random number generator 315, and judges whether values are identical. When values of random numbers are identical, the match judging section 317 refers to the authentication result supplied from the decoding section 316, and judges whether the authentication data are matched. If the authentication data are judged as identical, the match judging section 317 notifies the information to the lock controller 313. When values of the random numbers are not identical, or if judged that the authentication data do not matched, the match judging section 317 notifies the information to the error processing section 314 and causes the section to execute error processing.

The data bus interface section 302 is the interface for the reader/writer 121, and the interface of the data bus in which the access to the storage section 112 from the reader/writer 121 is limited by the controller 301. That is, the data sent/received through the data bus interface section 302 are normal data to be stored in the storage section 112, and possibility of input/output is limited by the controller 301. The data bus interface section 302 makes communication with the reader/writer 121 by a predetermined communication mode, in order to supply and store the data supplied from the storage section 112 in the storage section 112, and supply the data supplied from the storage section 112 to the reader/writer 121. The normal data may be encrypted by a predetermined encryption mode in order to prevent the data leaks.

The storage section 112 has a confidential area 321 as an area where the data to be used for user authentication are stored, in addition to the area where the normal data are stored. The confidential area 321 is configured to be unaccessible from the reader/writer 121, in order to prevent information leaks. The confidential area 321 stores the encrypted authentication data 331, the authentication mode ID and the public key 211 supplied from the authentication unit 101.

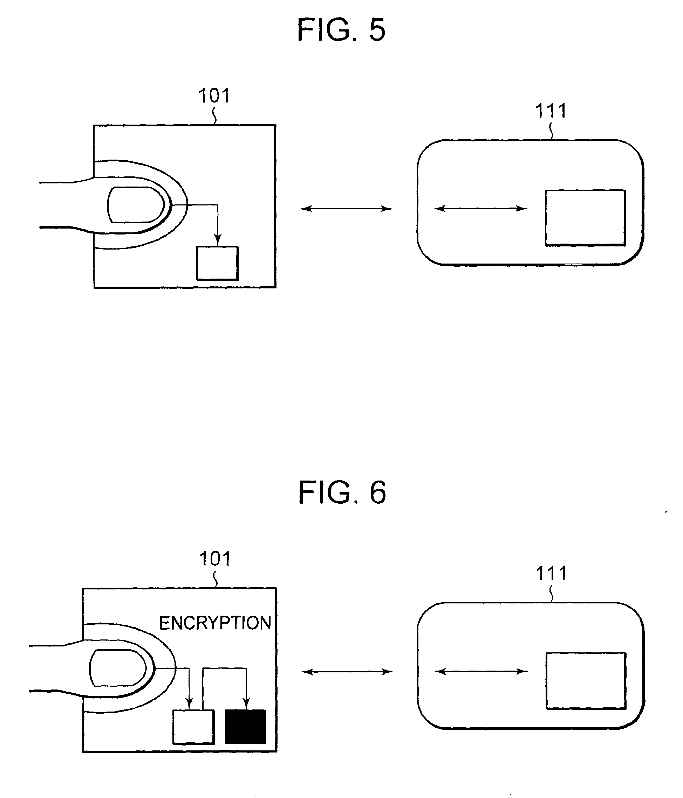

The flow of the processing performed by the respective devices in the system will be described next. Firstly, an example of the flow of lock processing performed by the authentication unit 101 and the storage media 111 when authentication data are registered will be described with reference to the flow chart in Fig. 4. In the description, reference is made to Figs. 5 to 8 when necessary.

For example, when limiting the access to the storage section 112 from the reader/writer 121, it is firstly required to register (store) the authentication data of a correct user in the storage media 111. At this time, the authentication unit 101 and the storage media 111 perform processing as shown in Fig. 4.

Firstly, at step S1, the authentication data accepting unit 201 of the authentication unit 101 accepts authentication data. For example, when the storage media 111 where no authentication data are registered is brought into a communicable state with the authentication unit 101, the authentication data accepting section 201 urges the user to input the user's fingerprint pattern by a predetermined method, and detects the inputted user's fingerprint pattern to obtain data thereof, as shown in Fig. 5. The obtained data are used as authentication data.

In step S2, the encrypting section 202 encrypts the authentication data accepted in the authentication data accepting section 201 by its own mode, as shown in Fig. 6. [0123]

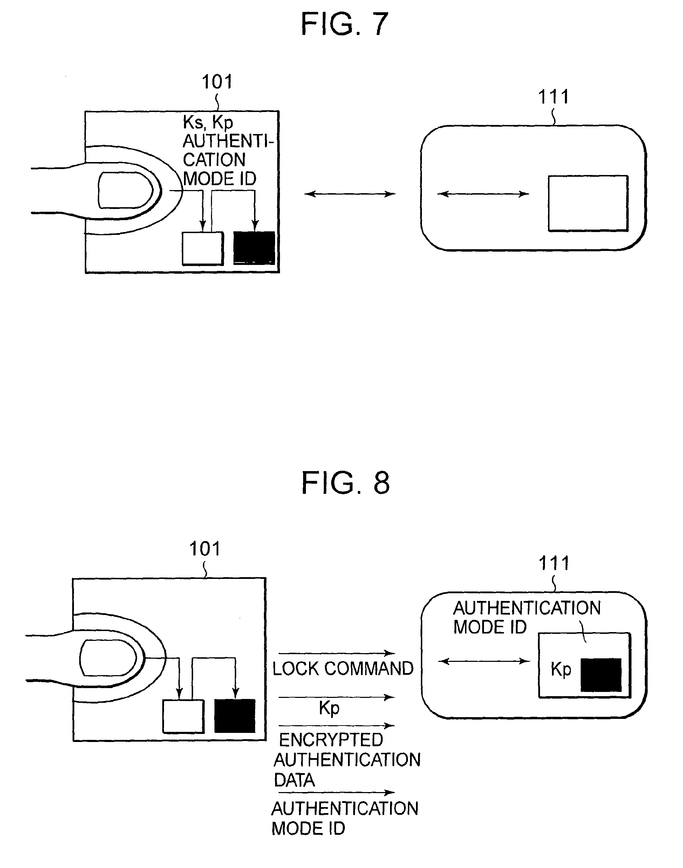

The authentication unit 101 holds a public key (Kp) 211, a secret key (Ks) 231, and an authentication mode ID 332, as shown in Fig. 7. In step S3, as shown in Fig. 8, the input/output controller 205 supplies through the storage media interface section 206 to the storage media 111 with the encrypted authentication data 331 which is generated by encryption of authentication data by the encrypting section 202, the authentication mode ID 332 having a value indicating the fingerprint authentication mode supplied from the authentication mode ID supplying section 203, and the public key (Kp) 211 as electronic key data obtained from the key holding section 204, together with the lock command requesting the inhibition of input/output of data to/from the storage section 112.

In step S21, when the input/output controller 312 of the storage media 111 obtains the encrypted authentication data 331, the authentication mode ID 332 and the public key (Kp) 211 supplied from the storage media 111. In step S22, the storage section 112 stores in the confidential area 321 the encrypted authentication data 331, the authentication mode ID 332 and the public key (Kp) 211 obtained by the input/output controller 312. In step S23, the lock controller 313 inhibits (locks) the access to the storage section 112 from the reader/writer 121.

Thus, upon the completion of the registration of the authentication data, the access to the storage section 112 from the reader/writer 121 is inhibited (locked).

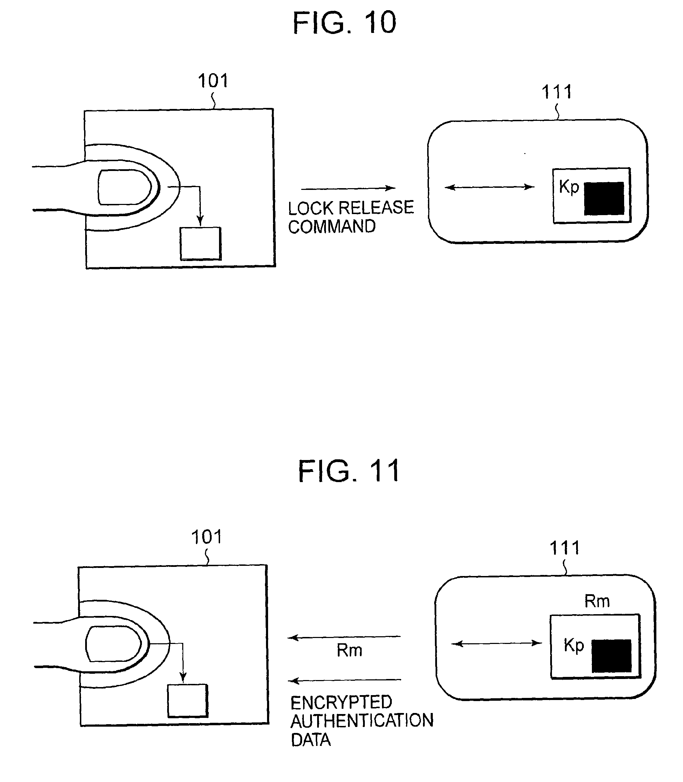

Next, an example of the flow of unlock processing performed by the authentication unit 101 and the storage media 111 when releasing the lock of the storage section 112 will be described with reference to the flow chart in Fig. 9. Description will be made by making reference to figs. 10 and 11 when necessary.

For example, when the access to the storage section 112 from the reader/writer 121 is permitted, the authentication of the user making access thereto is required. At this time, the authentication unit 101 and the storage media 111 perform processing as shown in Fig. 9.

In step S41, firstly the authentication data accepting section 201 of the authentication unit 101 accepts authentication data. For example, when the storage media 111 where the authentication data are registered is brought into a communicable state with the authentication unit 101, the authentication data accepting section 201 urges the user to input the user's fingerprint pattern by a predetermined method, and detects the inputted user's fingerprint pattern to obtain data thereof, as shown in Fig. 10. The obtained data are used as authentication data.

When the authentication data are accepted, in step S42, the unlock command supplying section 221 supplies the unlock command together with the authentication mode ID of the authentication unit 101, through the input/output controller 205 to the storage media 111. In step S61, the input/output controller 312 of the storage media 111 obtains the unlock command. In step S62, the random number generator 315 generates a random number Rm. In step S63, the input/output controller 312 obtains, from the confidential area 321, encrypted authentication data 331 corresponding to the authentication mode ID of the authentication unit 101, and then supplies the encrypted authentication data 331 and the random number Rm generated by the processing in step S62, to the authentication unit 101 being the supplier of the unlock command, as shown in Fig. 11.

In step S44, the input/output controller 205 of the authentication unit 101 obtains the encrypted authentication data 331 and the random number Rm. In step S45, the decoding section 222 decodes by its own mode the encrypted authentication data 331 obtained in step S44. In step S46, the comparing section 223 compares the authentication data obtained in step S41, with the authentication data decoded in step S45.

In step S47, for the purpose of preventing information leaks to others, the encrypting section 224 encrypts the authentication result as a comparison result in step S46, and the random number Rm obtained in step S44 by using a secret key (Ks) 231. In step S48, the input/output controller 205 supplies the data encrypted in the processing of step S47, to the storage media 111. In step S64, the input/output controller 312 of the storage media 111 obtains the encrypted data.

In step S65, the decoding section 316 decodes the encrypted data obtained in the processing in step S64 by using the public key (Kp) 211. In step S66, the match judging section 317 confirms whether the random number Rm obtained in the processing of step S64 and the random number generated in step S62 are matched. In step S67, the match judging section 317 judges whether the user is authenticated as being a correct user, by referring to the plain-text authentication result obtained by the decoding in step S65.

When the random numbers Rm are identical, and the authentication result is true, in step S68, the lock controller 313 permits the access to the storage section 112 from the reader/writer 121 (releases the lock).

The access thus permitted will be inhibited (locked) again by the lock controller 313 when a predetermined condition is satisfied. For example, when the reader/writer 121 and the storage media 111 are connected with a wired data bus, the lock controller 313 inhibits (locks) again the access to the storage section 112 from the reader/writer 121 if the data bus is electrically disconnected. In this case, even if the data bus is connected again, the access to the storage section 112 from the reader/writer 121 remains inhibited (locked). In order to release the lock, it is necessary to perform again the user authentication as shown in the flow chart of Fig. 9. The above is also applied to the case where the reader/writer 121 and the storage media 111 make communication by wireless communication. When the wireless communication between the reader/writer 121 and the storage media 111 is disconnected, the lock controller 313 inhibits (locks) again the access to the storage section 112 from the reader/writer 121. The condition under which the lock controller 313 inhibits the access to the storage section 112 from the reader/writer 121 is arbitral, and another condition may be applied. For example, when a predetermined time is passed after the release of lock, the lock controller 313 may inhibit the access to the storage section 112 from the reader/writer 121.

Next, descriptions will be made as to a specific flow of the processing performed in the controller 301 of the storage media 111 at lock/unlock as described above.

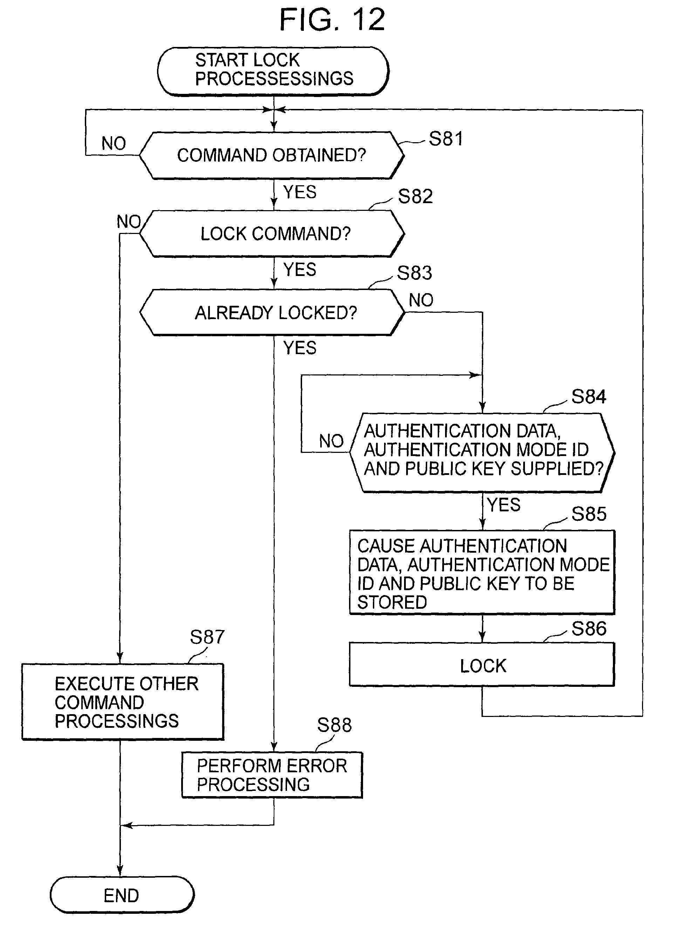

First, a description will be given about the flow of lock processing performed by the controller 301 when authentication data are registered by making reference to a flowchart of Fig. 12.

In step S81, the input/output controller 312 judges whether a command is obtained from the authentication unit 101, and waits until the command is issued. If judged as the command is obtained, the procedure advances to step S82. In step S82, the input/output controller 312 judges whether the obtained command is the lock command or not. If judged as being the lock command, the procedure advances to step S83. In step S83, the lock controller 313 judges whether the storage section 112 is already locked or not. If judged as the access to the storages section 112 from the reader/writer 121 is not yet inhibited, the procedure advances to step S84.

In step S84, the input/output controller 312 judges whether the encrypted authentication data 331, the authentication mode ID 332 and the public key 211 are supplied, and waits until these are supplied. If judged as the encrypted authentication data 331, the authentication mode ID332, and the public key 211 are obtained, the procedure advances to step S85. In step S85, the input/output controller 312 supplies the obtained encrypted authentication data 331, the authentication mode ID 332 and the public key 211 to the confidential area 321 of the storage section 112 to store therein. In step S86, the lock controller 313 inhibits (locks) the access to the storage area 112 from the reader/writer 121. When the processing in step S86 is completed, the procedure returns to step S81.

In step S82, if judged as the command obtained by the input/output controller 312 is not the lock command, the procedure advances to step S87. In step S87, the input/output controller 312 causes other command processing to be executed. The lock processing will be terminated when the processing in step S87 is completed.

In step S83, if judged as the storage section 112 is already locked, the procedure advances to step S88. In step S88, the error processing section 314 performs error processing. The lock processing is terminated when the processing in step S88 is completed.

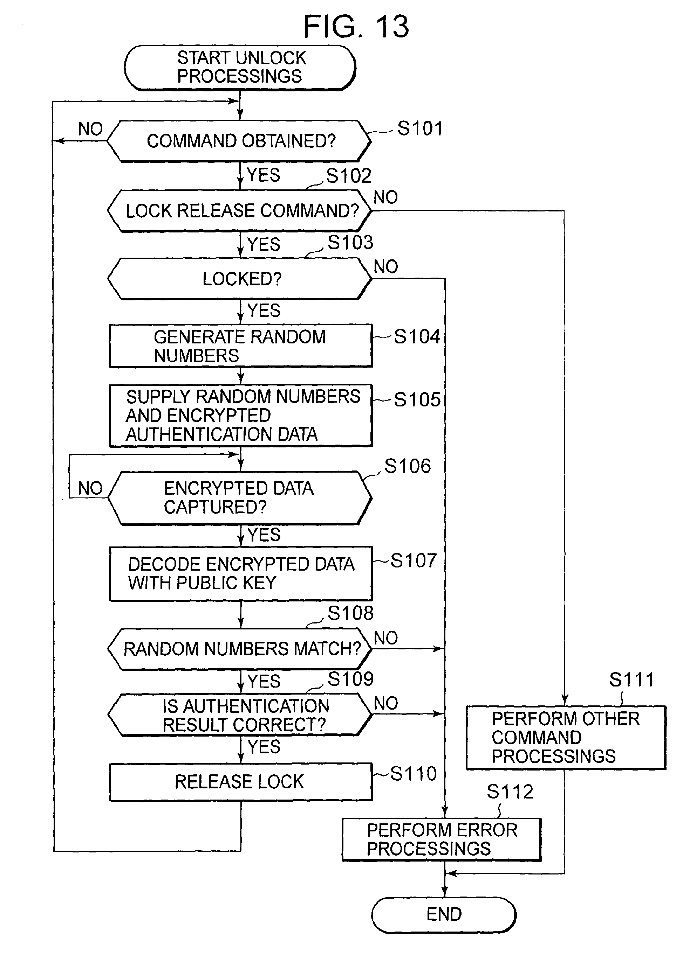

Next, an example of the flow of unlock processing performed by the controller 301 when an unlock is requested will be described below with reference to the flow chart of Fig. 13.

In step S101, the input/output controller 312 judges whether a command is obtained from the authentication unit 101, and waits until judges as obtained. When judged as a command is obtained, the procedure advances to step S102. In step S102, the input/output controller 312 judges whether the obtained command is the unlock command. If judged as being the unlock command, the procedure advances to step S103. In step S103, the lock controller 313 judges whether the storage section 112 is locked. If judged that the access to the storage section 112 from the reader/writer 121 is inhibited, the procedure advances to step S104.

In step S104, the random number generator 315 generates a random number. In step S105, the input/output controller 312 supplies the authentication unit 101 with the random number generated in the processing in step S104, and the encrypted authentication data corresponding to the authentication mode ID of the authentication unit 101 obtained together with the unlock command in step S101. In step S106, the input/output controller 312 judges whether encrypted data supplied from the authentication unit 101 are obtained, and waits until judged as obtained. If judged as the encrypted data are obtained, the input/output controller 312 cause the procedure to advances to step S107.

In step S107, the decoding section 316 decodes the encrypted data by the public key. In step S108, the match judging section 317 judges whether the random number supplied from the authentication unit 101 is matched with the random number generated by the processing in step S104. If judged as random numbers are identical, the procedure advances to step S109. In step S109, the match judging section 317 judges whether the authentication result supplied from the authentication unit 101 is true. If judged that the authentication result is true, the procedure advances to step S110.

In step S110, the lock controller 313 releases the inhibition (lock) of the access to the storage section 112 from the reader/writer 121. Upon completion of the processing in step S110, the procedure returns to step S101.

In step S102, if it is judged that the obtained command is not the unlock command, the procedure advances to step S111. In step S111, the input/output controller 312 causes other command processing to be executed. The unlock processing is terminated when the processing in step S111 is completed.

In step S103, if judged that the storage section 112 is not locked, the procedure advances to step S112. Similarly, in step 108, when judged as the random numbers are not matched, the procedure advances to step S112. Also, in step S109, if it is judged that the authentication result is not true, the procedure advances to step S112. In step S112, the error processing section 314 performs error processing. The unlock processing is terminated when the processing in step S112 is completed.

Thus, the use of the authentication mode ID enables the storage media 111 to easily supply proper encrypted authentication data to the authentication unit requesting the encrypted authentication data.

When the storage media 111 does not hold one encrypted authentication data, the authentication units can perform authentication processing by supplying sole encrypted authentication data to any of the authentication units. This however increases undesired sending/receiving of data, and there is the likelihood that the load of the authentication processing is increased to require a longer processing time. Depending on the case, the authentication unit might be broken due to the processing of noncorresponding encrypted authentication data.

On the contrary, in the configuration where the authentication mode ID is used to supply the encrypted authentication data held in the storage media 111 to the authentication unit only when corresponding to authentication mode of the authentication unit, the storage media 111 can correspond to authentication units having various types of authentication modes. This also reduces sending/receiving of the undesirable data, and lowers the load of the authentication processing, thereby realizing high speed authentication processing. This further enable to lower the possibility of failure caused in the authentication units, thereby improving the safety of the authentication processing.

Additionally, since the authentication unit for the user authentication is configured separately from the storage media 111 for storing data, the downsizing of the storage media 111 can be easily realized. Due to the downsizing, the storage media 111 becomes more easily portable. It is therefore possible to increase the types of devices to which the storage media 111 can be applied, and also reduce the manufacturing costs and the power consumption. This improves the convenience of the storage media 111.

Further, the separate configuration of the authentication units and the storage media 111 can reduce the risk of information leaks when the storage media 111 is obtained by others. Since the storage media 111 can lock and unlock based only on the authentication result, irrespective of the authentication mode of the authentication unit, as described above, it is easy to apply a certain authentication mode even if it is unconfirmed at this point. For example, if a certain authentication mode having higher safety and higher convenience is newly developed in future, an authentication unit of this authentication mode may be configured to perform data sending/receiving to/from the storage media 111 as described above, requiring no change in the storage media 111.

The storage media 111 confirms the authentication unit being a communication object by generating a random number and sending/receiving the random number when releasing the lock. It is therefore possible to reduce the risk of information leaks due to impersonation or the like.

Thus, it is capable of providing the storage media with the improved safety and convenience.

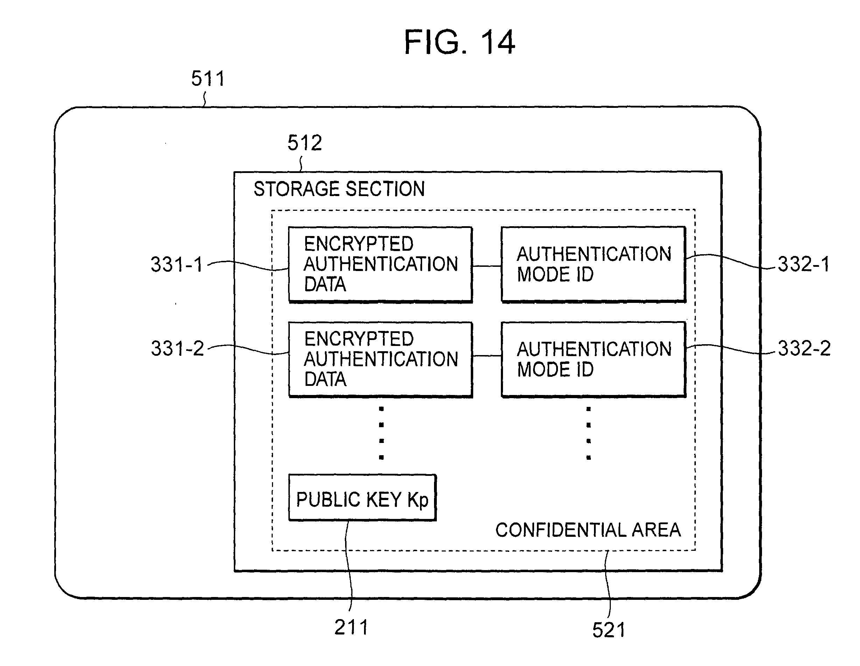

Although Fig. 3 shows the case where the encrypted authentication data 331, the authentication mode ID and the public key (Kp) 211 are stored respectively in the confidential area 321 of the storage section 112, the respective numbers of the encrypted authentication data 331, the authentication mode ID and the public key (Kp) 211 to be stored in the confidential area 321 are arbitrary, namely, at least one. Fig. 14 shows an example where a plurality of encrypted authentication data 331 and the authentication mode ID are stored in a confidential area.

In Fig. 14, a plurality of encrypted authentication data (encrypted authentication data 331-1, 331-2, .), a plurality of authentication mode IDs (authentication mode IDs 332-1, 332-2) .) and a public key 211 are stored in a confidential area 521 of a storage section 512 of a storage media 511. In the confidential area 521, the encrypted authentication data and the authentication mode IDs are associated with each other.

This enables the storage media 511 to identify the registered encrypted authentication data by using the authentication mode ID per each of the authentication modes of the authentication units used at the time of registration. Therefore, when one of the authentication unit requests encrypted authentication data, the storage media 511 can supply the encrypted authentication data associated with the authentication mode ID of this authentication unit. That is, it is capable of supplying the encrypted authentication data of the appropriate mode to the authentication units.

By configuring so that a plurality of encrypted authentication data can be registered, a plurality of users can be registered as correct users. That is, a plurality of encrypted authentication data stored in the confidential area 521 may be those owned by different users.

Although the example shown in Fig. 14 is the case where the public key 211 is common to all of the authentication units, the public key 211 may be different per each authentication mode. That is, a plurality of public keys may be stored in the confidential area 521. In this case, the public key 211 corresponding to authentication mode ID may be associated with the authentication mode ID, like a case in the encrypted authentication data.

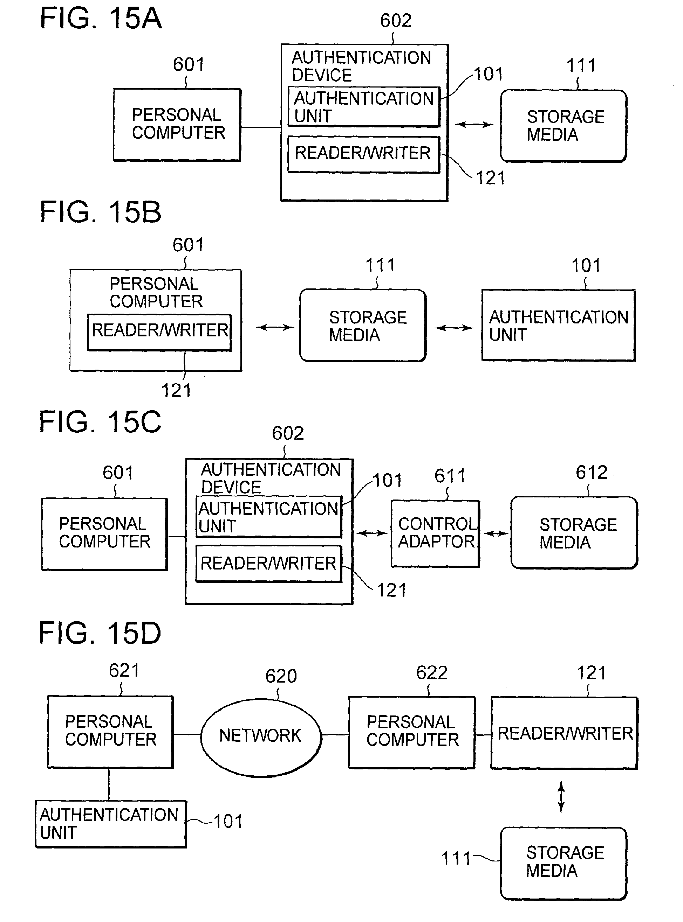

A specific configuration example of the above system will be described with reference to Figs. 15A to 15D.

In the example of Fig. 15A, the authentication unit 101 and the reader/writer 121 are configured as an authentication device 602 being a peripheral equipment of a personal computer 601, and are connected to the personal computer 601 in a controllable manner.

In this case, for example, when the storage media 111 is brought into a communicable state with the reader/writer 121 by mechanically connecting them to each other or bringing them near each other, the reader/writer 121 detects the storage media 111, and notifies the information to control software executed by the personal computer 601. The control software causes, for example, a display device to display a guide message and an image to urge the user to input the user's fingerprint pattern. The control software also controls the authentication unit 101 and causes the unit to detect the user's fingerprint pattern. The authentication unit 101 makes communication with the storage media 111 as described above, and performs processing related to unlock or authentication data registration. When the lock is released, the personal computer 601 can access the storage media 111 through the reader/writer 121.

The authentication unit 101 and the reader/writer 121 may be housed in the personal computer 601. The personal computer 601 represents a typical information processing apparatus, and it may be of any type as long as it is communicable with the authentication device 602 as described above.

In this case, the storage media 111 does not have the authentication unit 101, thus enabling downsizing thereof. Further, reductions in costs and power consumption, as well as an improvement in portability are enabled. For example, when the personal computer 601 and the authentication device 602 are facilities installed at each location, such as an automatic vending machine and an automatic teller machine (ATM), the user can use any authentication device 602 only by carrying the storage media 111. Further, since the storage media 111 can be used irrespective of the authentication mode, it is applicable to various types of systems, and it is also easy to introduce a new authentication technique to the system, making it easy to improve the safety.

As shown in Fig. 15B, the reader/writer 121 and the authentication unit 101 may be configured separately. In the case of Fig. 15B, the reader/writer 121 is housed in the personal computer 601. The authentication unit 101 is configured as a portable device separated from the storage media 111. The user may carry the two devices of the storage media 111 and the authentication unit 101, and when using them, the user may bring the storage media 111 into the communicable state with the reader/writer 121. Only when authentication data are registered or the lock is released, the user brings the authentication unit 101 into the communicable state with the storage media 111 to perform the abovementioned processing.

Like the authentication device 602 in Fig. 15A, the reader/writer 121 may be configured separately from the personal computer 601, and as peripheral equipment connected to the personal computer 601. Alternatively, the storage media 111 may be housed in the personal computer 601.

In this case, the user can use the authentication unit 101 only when necessary, and bring the storage media 111 into non-communicable state with the authentication unit 101 when unnecessary. This can prevent the risk of information leaks to others. Further, by causing the storage media 111 to be in communicable state only with a specific authentication unit 101, it is possible to configure as the lock of the storage media 111 cannot be released unless a correct user uses a correct authentication unit 101. That is, the user can use the authentication unit 101 like the hardware key of the storage media 111.

As shown in Fig. 15C, the storage media 111 may be configured as two devices; a control adaptor 611 having the controller 301 and the data bus interface section 302 shown in Fig. 3, and a storage media 612 having the storage section 112.

In this case, the storage media 612 is similar to a related art storage medium having no lock function. The control adaptor 611 operates as the interface of the storage media 612, and limits the access to the storage media 612 from outside. That is, the control adaptor 611 is a device for giving the lock/unlock function (access limit function) to the related art storage medium having no lock function.

When the control adaptor 611 and the storage media 612 are in communicable states, these are equal to the storage media 111. That is, the configuration of Fig. 15C is similar with the configuration of Fig. 15A.

In this case, the manufacturing costs of the control adaptor 611 can be lowered than that of the storage media 111, because the storage section 112 is not included. Additionally, since the related art storage media having no lock function can be used, the user can utilize the user's own property effectively.

By the separate configurations of the authentication unit 101 and the storage media 111, as long as the authentication unit 101 and the storage media 111 are communicable with each other, mutual physical distance becomes arbitral, thus allowing applications to more various kinds of systems. For example, as shown in Fig. 15D, both may be connected through a network 620.

In the case of Fig. 15D, a personal computer 621 and a personal computer 622 are connected to each other in a communicable manner through an arbitral network 620 represented by internet, LAN, and the like. The personal computers 621 and 622 represent typical information processing apparatuses, and these may be any type of devices.

The authentication unit 101 is connected to the personal computer 621 in a communicable manner, and the storage media 111 is connected through the reader/writer 121 to the personal computer 622 in a communicable manner. That is, the authentication unit 101 and the storage media 111 are connected to each other through the personal computer 621, the network 620, the personal computer 622 and the reader/writer 121.

Even in this case, the authentication unit 101 is connected to the storage media 111 in a communicable manner, enabling the lock/unlock of the storage media 111 by the communication similar with that in case of Fig. 15A. For example, by setting the storage media 111 at a communicable state with the reader/writer 121 of the personal computer 622 to be installed at home, the authentication unit 101 connected to the personal computer 621 carried with the user's to the outside can be used to release the lock of the storage media 111 at home from outside, thereby allowing access. In this case, even if the user carries neither the authentication unit 101 nor the storage media 111, the user can access the storage media 111 by using the authentication unit 101 installed at an arbitrary place at communicable state with the storage media 111.

Thus, by separately configuring the authentication unit and the storage media being storage medium, safety and convenience can be further improved, thereby applicable to various systems.

Although the foregoing description is given to the case where the user registers the authentication data in the storage media 111 by using the authentication unit 101, but a case is not limited to the above, and the authentication data may be stored in the storage media 111 when being manufactured. For example, a ROM for storing encrypted authentication data may be provided in the storage media to prevent update and deletion. In this case, although the user and the purpose are limited, it is possible to prevent data from being altered to further improve safety.

Alternatively, when obtaining access permission to the storage media 111, it may be configured as a plurality of authentication modes be used to require user authentication a plurality of times. In this case, the user cannot release the lock of the storage media 111 unless the user performs user authentication a plurality of times by a plurality of authentication mode, and is authenticated in all of the authentication modes. The multilocking by means of a plurality of the authentication modes can further improve the safety against the data leaks of the storage media 111.

For example, as described above, a ROM for storing a predetermined password may be provided in the storage media 111, and it may be configured as authentication using the password stored in the ROM is required when the user registers authentication data such as the fingerprint pattern in the storage media 111. This can avoids others from registering authentication data without permission, thereby improving the safety against the data leaks of the storage media 111.

In case a plurality of users' authentication data are enabled to be registered, the storage media 111 may allocate an area where access of the storage section 112 is permitted and the execution right per each authentication data. That is, based on the authentication data used for authentication, the accessible areas of the storage section 112 and the executable processing can be distinguished or limited.

For example, to the authentication data stored in the ROM when shipped from plants, the limitless manager right may be assigned, and to the authentication data registered thereafter, updatable data and the user right where areas are limited may be assigned.

Alternatively, the storage media 111 may be configured as capable of managing authentication data per each user by performing registration after releasing the lock by the authentication data previously registered by the user when authentication data are newly registered. In this case, the accessible areas of storage section 112 and the right of execution can be distinguished or limited per a user.

Although in the foregoing, the authentication data are described as being encrypted, but the case is not limited to the above, and the authentication data may be plain-text and sent/received between the authentication unit 101 and the storage media 111. In this case, the encrypting section 202 and the decoding section 222, as well as the processing of step S2 in Fig. 4, and the processing of step S45 in Fig. 9 can be omitted, thereby enabling a reduction in size of the circuit of the authentication unit 101, and a reduction in the load of the processing. However, the safety against information leaks will be lowered.

Similarly, although in the foregoing, it has been described as the authentication unit 101 encrypts the authentication result and the random number by the secret key 231, and the storage media 111 decodes the encrypted data by the public key 211, the authentication result and the random number may be sent/received in plain text form. In this case, the key holding section 204, the encrypting section 224 and the decoding section 316, as well as the processing of step S47 and the processing of step S65 in Fig. 9 can be omitted, thereby enabling reductions in size of the circuit of the authentication unit 101 and the storage media 111, and a reduction in the load of the processing. However, the safety against information leaks will be lowered.

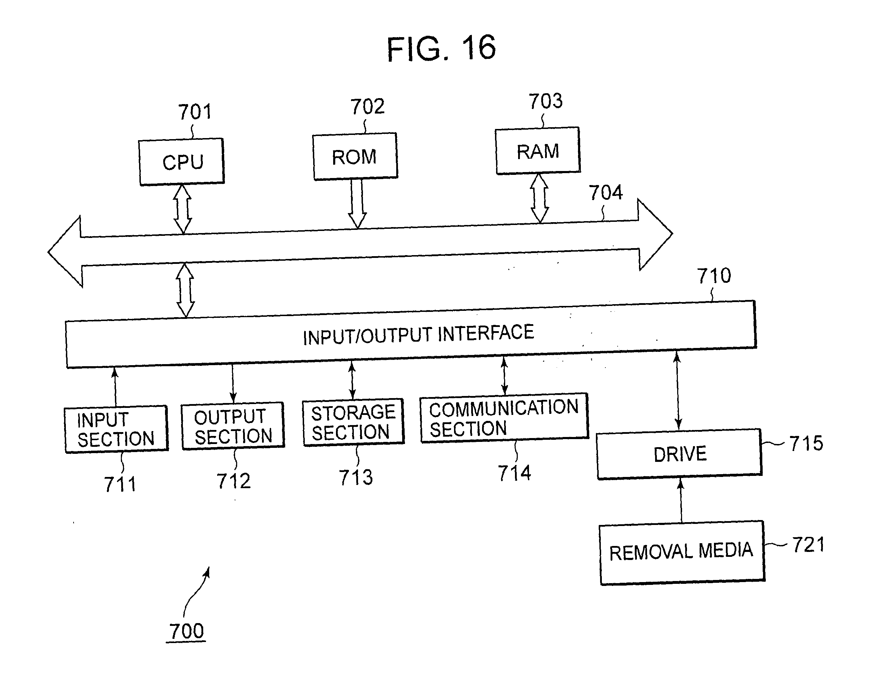

The series of processing may also be executed by hardware or software. In this case, it may be configured as a personal computer as shown in Fig. 16, for example.

In Fig. 16, a CPU 701 of a personal computer 700 performs various kinds of processing in accordance with a program stored in a Read Only Memory (ROM) 702, or a program loaded from a storage section 713 to a Random Access Memory (RAM) 703. The data necessary for the CPU 701 to perform various kinds of processing are also stored in the RAM 703.

The CPU 701, the ROM 702 and the RAM 703 are mutually connected through a bus 704, and an input/output interface 710 is also connected to the bus 704.

An input section 711, such as a keyboard and a mouse, a display including a Cathode Ray Tube (CRT), a Liquid Crystal Display (LCD), etc, an output section 712 including speakers, etc, a storage section 713 including a hard disk, etc, and a communication section 714 including a modem, etc are connected to the input/output interface 710. The communication section 714 performs communication processing through a network including internet.

To the input/output interface 710, a drive 715 is connected, and to the drive, removable media 721, such as a magnetic disk, an optical disk, a photomagnetic disk, or a semiconductor memory is mounted when necessary. A computer program read therefrom is installed in the storage section 713 where necessary.

When the series of processing are performed by software, the program included in the software is installed from the network or a storage medium.

This storage medium is, as shown in Fig. 16, includes a magnetic disk (including a flexible disk), an optical disk (including a Compact Disk-Read Only Memory (CD-ROM) and a Digital Versatile Disk (DVD)), a magnetic optical disk (including a Mini-Disk (MD, registered trademark)), or the removable media 721 including a semiconductor memory, each of which stores a program and is distributed for supplying the program to the user, and not included in the apparatus main body. The storage medium also includes the ROM 702 storing the program, and a hard disk contained in the storage section 713, each of which is distributed to the user in a state of being previously incorporated into the apparatus main body.

In the present specification, the steps describing the program to be stored in the storage medium includes the processing to be performed in time series along the described order, as well as the processing to be executed in parallel or individually, even if they are not processed in time series.

In the present specification, the term "system" means the entire apparatus configured by a plurality of devices (units).

The configuration described above as a single device may be divided and configured as a plurality of devices. Conversely, the configuration described above as a plurality of devices may be configured integrally as a single device. Of course, a certain configuration other those described above may be added to the configuration of each device. If the configuration and the operation as the entire system are substantially same, a part of the configuration of one device may included in the configuration of other device. That is, the embodiment of the present invention is not limited to the above embodiment and various modifications may be without departing from the gist of the present invention.

For example, the present invention is applicable to an information processing apparatus for controlling input/output to/from a storage media.

Embodiments of the present invention enable the access to the storage medium to be limited. Particularly, safety and convenience can be further improved by separately configuring the authentication unit and the storage medium.

It should be understood by those skilled in the art that various modifications, combinations, subcombinations and alterations may occur depending on design requirements and other factors insofar as they are within the scope of the appended claims or the equivalents thereof.

The present document contains subject matter related to Japanese Patent Application No.2007-094172 filed in the Japanese Patent Office on March 30, 2007.

## Claims

1. An information processing apparatus limiting access to a storage medium from outside, comprising:
unlock command obtaining means for obtaining, from an authentication unit configured separately from the information processing apparatus, a unlock command requesting release of inhibition of access to the storage medium, and also an authentication mode ID for identifying an authentication mode of the authentication unit;
authentication data supplying means for supplying the authentication unit with authentication data used as sample data indicating that a user is verified in an authentication processing of a user instructing access to the storage medium, the authentication data being corresponding to the authentication mode ID obtained together with the unlock command from the unlock command obtaining means;
authentication result obtaining means for obtaining, from the authentication unit, an authentication result of the authentication processing performed by using the authentication data supplied from the authentication data supplying means;
authentication result confirming means for confirming contents of the authentication result; and
release means for releasing inhibition of access to the storage medium from outside when, as a result of confirmation made by the authentication result confirming means, the user is authenticated as being verified.

2. The information processing apparatus according to claim 1, further comprising a random number generating means for generating a random number by a predetermined method, wherein;
the authentication data supplying means supplies a random number generated by the random number generating means, together with the authentication data to the authentication unit;
the authentication result obtaining means obtains the random number together with the authentication result from the authentication unit; and
the authentication result confirming means further confirms whether the random number obtained by the authentication result obtaining means is identical with the random number generated by the random number generating means.

3. The information processing apparatus according to claim 1, wherein:
the authentication result obtained by the authentication result obtaining means is encrypted by a secret key being predetermined electronic key information, in the authentication unit,
the information processing apparatus further comprising:
decoding means for decoding the authentication result by using a public key being electronic key information to be publicly available corresponding to the secret key.

4. The information processing apparatus according to claim 3, further comprising:
storage control means for causing the storage medium to store information, wherein;
the storage control means causes a predetermined storage area in the storage medium to store the authentication data, the authentication mode ID and the public key.

5. The information processing apparatus according to claim 4, wherein:
the authentication data stored in the storage medium by the storage control means are encrypted authentication data encrypted by the authentication unit by a predetermined encryption mode.

6. The information processing apparatus according to claim 5, further comprising:
registration information obtaining means for obtaining the encrypted authentication data, the authentication mode ID and the public key from the authentication unit; and
inhibiting means for inhibiting access to the storage medium, wherein;
the storage control means causes the encrypted authentication data, the authentication mode ID and the public key obtained by the registration information obtaining means to be stored in the storage medium; and
the inhibiting means inhibits access to the storage medium, when the storage control means causes the encrypted authentication data, the authentication mode ID and the public key to be stored in the storage medium.

7. An information processing method of an information processing apparatus limiting access to a storage medium from outside, comprising the steps of:
obtaining, from an authentication unit configured separately from the information processing apparatus, an unlock command for requesting release of inhibition of access to the storage medium, and an authentication mode ID for identifying an authentication mode of the authentication unit;
supplying the authentication unit with authentication data used as sample data indicating that a user is verified in an authentication processing of a user instructing access to the storage medium, the authentication data being corresponding to the authentication mode ID obtained together with the unlock command;
obtaining, from the authentication unit, an authentication result of the authentication processing performed by using the supplied authentication data;
confirming contents of the authentication result; and
releasing inhibition of access to the storage medium from outside when, as a result of confirmation, the user is authenticated as being verified.

8. A program causing a computer limiting access to a storage medium from outside to execute information processing comprising the steps of:
obtaining, from an authentication unit configured separately from the computer, an unlock command for requesting release of inhibition of access to the storage medium, and also an authentication mode ID for identifying an authentication mode of the authentication unit;
supplying the authentication unit with authentication data used as sample data indicating that a user is verified in an authentication processing of a user instructing access to the storage medium, the authentication data being corresponding to the authentication mode ID obtained together with the unlock command;
obtaining, from the authentication unit, an authentication result of the authentication processing performed by using the supplied authentication data;
confirming contents of the authentication result; and
releasing inhibition of access to the storage medium from outside when, as a result of confirmation, the user is authenticated as being verified.

9. An information processing apparatus limiting access to a storage medium from outside, comprising:
unlock command obtaining means for obtaining, from an authentication unit configured separately from the information processing apparatus, an unlock command for requesting release of inhibition of access to the storage medium;
random number generating means for generating a random number by a predetermined method;
authentication data supplying means for supplying the authentication unit with authentication data used as sample data indicating that a user is verified in an authentication processing of a user instructing access to the storage medium, and the random number generated by the random number generating means;
authentication result obtaining means for obtaining, from the authentication unit, an authentication result of the authentication processing performed by using the authentication data supplied from the authentication data supplying means, and the random number;
confirming means for confirming contents of the authentication result and confirming whether the random number obtained by the authentication result obtaining means is identical in value with the random number generated by the random number generating means; and
release means for releasing inhibition of access to the storage medium from outside when, as a result of confirmation made by the confirming means, the two random numbers are identical in value and the user is authenticated as being verified.

10. The information processing apparatus according to claim 9, wherein;
the unlock command obtaining means obtains authentication mode ID for identifying an authentication mode of the authentication unit, together with the unlock command; and
the authentication data supplying means supplies the authentication unit with authentication data corresponding to the authentication mode ID obtained together with the unlock command from the unlock command obtaining means, and the random number generated by the random number generating means.

11. The information processing apparatus according to claim 10, wherein;
the authentication result obtained by the authentication result obtaining means is encrypted by a secret key being predetermined electronic key information, - in the authentication unit,
the information processing apparatus further comprising:
decoding means for decoding the authentication result by using a public key as being electronic key information to be publicly available corresponding to the secret key.

12. The information processing apparatus according to claim 11, further comprising:
storage control means for causing the storage medium to store information, wherein;
the storage control means causes a predetermined storage area in the storage medium to store the authentication data, the authentication mode ID and the public key.

13. The information processing apparatus according to claim 12, wherein;
the authentication data stored in the storage medium by the storage control means are encrypted authentication data encrypted by the authentication unit by a predetermined encryption mode.

14. The information processing apparatus according to claim 13, further comprising:
registration information obtaining means for obtaining the encrypted authentication data, the authentication mode ID and the public key from the authentication unit; and
inhibiting means for inhibiting access to the storage medium, wherein;
the storage control means causes the encrypted authentication data, the authentication mode ID and the public key obtained from the registration information obtaining means to be stored in the storage medium; and
the inhibiting means inhibits access to the storage medium when the storage control means causes the encrypted authentication data, the authentication mode ID and the public key to be stored in the storage medium.

15. An information processing method of an information processing apparatus limiting access to a storage medium from outside, comprising the steps of:
obtaining, from an authentication unit configured separately from the information processing apparatus, an unlock command for requesting release of inhibition of access to the storage medium;
generating a random number by a predetermined method;
supplying the authentication unit with authentication data used as sample data indicating that a user is verified in an authentication processing of a user instructing access to the storage medium, and the generated random number;
obtaining, from the authentication unit, an authentication result of the authentication processing performed by using the supplied authentication data, and a random number;
confirming contents of the authentication result, and confirming whether the obtained random number and the generated random number are identical in value; and
releasing inhibition of access to the storage medium from outside when, as a result of confirmation, the two random numbers are identical in value, and the user is authenticated as being verified.

16. A program causing a computer limiting access to a storage medium from outside to execute information processing comprising the steps of:
obtaining, from an authentication unit configured separately from the information processing apparatus, an unlock command for requesting release of inhibition of access to the storage medium;
generating a random number by a predetermined method;
supplying the authentication unit with authentication data used as sample data indicating that a user is verified in an authentication processing of a user instructing access to the storage medium, and the generated random number;
obtaining, from the authentication unit, an authentication result of the authentication processing performed by using the supplied authentication data and a random number;
confirming contents of the authentication result, and confirming whether the obtained random number and the generated random number are identical in value; and
releasing inhibition of access to the storage medium from outside when, as a result of confirmation, the two random numbers are identical in value, and the user is authenticated as being verified.

17. An information processing apparatus for authenticating a user performing an instruction for access to a storage medium to which access from outside is limited, comprising:
authentication data accepting means for accepting authentication data inputted by the user for the user authentication;
unlock command supplying means for supplying an unlock command requesting release of inhibition of access to the storage medium, and an authentication mode ID for identifying an authentication mode of the user authentication performed in the information processing apparatus, to an input/output controller which is configured separately from the information processing apparatus and limits access to the storage medium;
authentication data obtaining means for obtaining, from the input/output controller, authentication data used as sample data indicating that a user is verified, the authentication data being corresponding to the authentication mode ID supplied together with the unlock command from the unlock command supplying means;
authentication means for authenticating the user by comparing the authentication data accepted by the authentication data accepting means, with the authentication data obtained by the authentication data obtaining means; and
authentication result supplying means for supplying an authentication result of the user authentication performed by the authentication means, to the input/output controller.

18. The information processing apparatus according to claim 17, wherein;
the authentication data obtained by the authentication data obtaining means are encrypted authentication data encrypted by a predetermined encryption mode,
the information processing apparatus further comprising:
decoding means for decoding the encrypted authentication data by a decoding mode corresponding to the predetermined encryption mode.

19. The information processing apparatus according to claim 17, wherein;
the authentication data obtaining means obtains a predetermined random number together with the authentication data; and
the authentication result supplying means supplies the random number obtained by the authentication data obtaining means together with the authentication result.

20. The information processing apparatus according to claim 17, further comprising:
key holding means for holding a secret key being predetermined electronic key information; and
authentication result encrypting means for encrypting the authentication result by using the secret key held by the key holding means.

21. The information processing apparatus according to claim 20, wherein;
the key holding means holds a public key being electronic key information to be publicly available corresponding to the secret key, the information processing apparatus further comprising:
authentication data encrypting means for encrypting the authentication data accepted by the authentication data accepting means by a predetermined encryption mode; and
lock command supplying means for supplying the input/output controller with encrypted authentication data obtained by encryption performed by the authentication data encrypting means, the authentication mode ID and the public key held by the key holding means, together with a lock command requesting inhibition of access to the storage medium.

22. An information processing method of an information processing apparatus authenticating a user instructing access to a storage medium to which access from outside is limited, comprising the steps of:
accepting authentication data inputted by the user for the user authentication;
supplying an unlock command requesting release of inhibition of access to the storage medium, and an authentication mode ID for identifying an authentication mode of the user authentication performed in the information processing apparatus, to an input/output controller which is configured separately from the information processing apparatus and limits access to the storage medium;
obtaining, from the input/output controller, authentication data used as sample data indicating that a user is verified, the authentication data being corresponding to the authentication mode ID supplied together with the unlock command;
authenticating the user by comparing the accepted authentication data with the obtained authentication data; and
supplying an authentication result of the user authentication to the input/output controller.

23. A program for causing a computer authenticating a user performing an instruction for access to a storage medium to which access from outside is limited, to perform information processing comprising the steps of:
accepting authentication data inputted by the user for the user authentication;
supplying an unlock command requesting release of inhibition of access to the storage medium, and an authentication mode ID for identifying an authentication mode of the user authentication performed in the information processing apparatus, to an input/output controller which is configured separately from the information processing apparatus and limits access to the storage medium;
obtaining, from the input/output controller, authentication data used as sample data indicating that an user is verified, the authentication data being corresponding to the authentication mode ID supplied together with the unlock command;
authenticating the user by comparing the accepted authentication data with the obtained authentication data; and
supplying an authentication result of the user authentication to the input/output controller.

24. An information processing apparatus for authenticating a user performing an instruction for access to a storage medium to which access from outside is limited, comprising:
authentication data accepting means for accepting authentication data inputted by the user for the user authentication;
unlock command supplying means for supplying an unlock command requesting release of inhibition of access to the storage medium, to an input/output controller which is configured separately from the information processing apparatus and limits access to the storage medium;
authentication data obtaining means for obtaining, from the input/output controller, authentication data used as sample data indicating that an user is correct, and a predetermined random number;
authentication means for authenticating the user by comparing the authentication data accepted by the authentication data accepting means, with the authentication data obtained by the authentication data obtaining means; and
authentication result supplying means for supplying the input/output controller with an authentication result of the user authentication performed by the authentication means, together with the random number obtained by the authentication data obtaining means.

25. The information processing apparatus according to claim 24, wherein;
the authentication data obtained by the authentication data obtaining means are encrypted authentication data encrypted by a predetermined encryption mode,
the information processing apparatus further comprising:
decoding means for decoding the encrypted authentication data by a decoding mode corresponding to the predetermined encryption mode.

26. The information processing apparatus according to claim 24, wherein;
the unlock command supplying means supplies the input/output controller with an authentication mode ID for identifying an authentication mode of the user authentication performed in the information processing apparatus, together with the unlock command.

27. The information processing apparatus according to claim 24, further comprising:
key holding means for holding a secret key being predetermined electronic key information; and
authentication result encrypting means for encrypting the authentication result by using the secret key held by the key holding means.

28. The information processing apparatus according to claim 27, wherein;
the key holding means holds a public key being electronic key information to be publicly available corresponding to the secret key, the information processing apparatus further comprising:
authentication data encrypting means for encrypting the authentication data accepted by the authentication data accepting means by a predetermined encryption mode; and
lock command supplying means for supplying the input/output controller with encrypted authentication data obtained by encryption performed by the authentication data encrypting means, and the public key held by the key holding means, together with a lock command requesting inhibition of access to the storage medium.

29. An information processing method of an information processing apparatus for authenticating a user performing an instruction for access to a storage medium to which access from outside is limited, comprising the steps of:
accepting authentication data inputted by the user for the user authentication;
supplying an unlock command requesting release of inhibition of access to the storage medium, to an input/output controller which is configured separately from the information processing apparatus and limits access to the storage medium;
obtaining, from the input/output controller, authentication data used as sample data indicating that an user is verifed, and a predetermined random number;
authenticating the user by comparing the accepted authentication data with the obtained authentication data; and
supplying the input/output controller with an authentication result of the user authentication, together with the obtained random number.

30. A program for causing a computer authenticating a user performing an instruction for access to a storage medium to which access from outside is limited, to perform information processing comprising the steps of:
accepting authentication data inputted by the user for the user authentication;
supplying an unlock command requesting release of inhibition of access to the storage medium, to an input/output controller which is configured separately from the information processing apparatus and limits access to the storage medium;
obtaining, from the input/output controller, authentication data used as sample data indicating that an user is verified and a predetermined random number;
authenticating the user by comparing the accepted authentication data with the obtained authentication data; and
supplying an authentication result of the user authentication and the obtained random number to the input/output controller.

31. An information processing system comprising:
an input/output controller for limiting access to a storage medium from outside; and
an authentication unit which is configured separately from the input/output controller, and authenticates a user performing an instruction for access to the storage medium, wherein;
the input/output controller includes:
unlock command obtaining means for obtaining, from the authentication unit, an unlock command requesting release of inhibition of access to the storage medium, and an authentication mode ID for identifying an authentication mode of the authentication unit;
authentication data supplying means for supplying the authentication unit with authentication data used as sample data indicating that an user is verified in the user authentication, the authentication data being corresponding to the authentication mode ID obtained together with the unlock command from the unlock command obtaining means;
authentication result obtaining means for obtaining, from the authentication unit, an authentication result of the user obtained by using the authentication data supplied from the authentication data supplying means;
authentication result confirming means for confirming contents of the authentication result; and
release means for releasing inhibition of access to the storage medium from outside if, as a result of confirmation made by the authentication result confirming means, the user is verified,
the authentication unit includes:
authentication data accepting means for accepting authentication data inputted by the user for the user authentication;
unlock command supplying means for supplying the unlock command and the authentication mode ID to the input/output controller;
authentication data obtaining means for obtaining, from the input/output controller, authentication data corresponding to the authentication mode ID supplied together with the unlock command from the unlock command supplying means;
authentication means for authenticating the user by comparing the authentication data accepted by the authentication data accepting means, with the authentication data obtained by the authentication data obtaining means; and
authentication result supplying means for supplying an authentication result of the user authentication performed by the authentication means, to the input/output controller.

32. An information processing system comprising:
an input/output controller for limiting access to a storage medium from outside; and
an authentication unit which is configured separately from the input/output controller, and authenticates a user performing an instruction for access to the storage medium, wherein;
the input/output controller includes:
unlock command obtaining means for obtaining, from the authentication unit, an unlock command requesting release of inhibition of access to the storage medium;
random number generating means for generating a random number by a predetermined method;
authentication data supplying means for supplying the authentication unit with authentication data used as sample data indicating that an user is verified in the user authentication, and the random number generated by the random number generating means;
authentication result obtaining means for obtaining, from the authentication unit, an authentication result of the user obtained by using the authentication data supplied from the authentication data supplying means, and a random number;
confirming means for confirming contents of the authentication result and confirming whether the random number obtained by the authentication result obtaining means is identical with the random number generated by the random number generating means; and
release means for releasing inhibition of access to the storage medium from outside if, as a result of confirmation made by the confirming means, the two random numbers are identical in value and the user is verified,
the authentication unit includes:
authentication data accepting means for accepting authentication data inputted by the user for the user authentication;
unlock command supplying means for supplying the unlock command to the input/output controller;
authentication data obtaining means for obtaining, from the input/output controller, the authentication data and the random number;
authentication means for authenticating the user by comparing the authentication data accepted by the authentication data accepting means, with the authentication data obtained by the authentication data obtaining means; and
authentication result supplying means for supplying the input/output controller with an authentication result of the user from the authentication means, and the random number obtained by the authentication data obtaining means.

33. An information processing apparatus limiting access to a storage medium from outside, comprising:
a unlock command obtaining section to obtain, from an authentication unit configured separately from the information processing apparatus, a unlock command requesting release of inhibition of access to the storage medium, and an authentication mode ID for identifying an authentication mode of the authentication unit;
an authentication data supplying section to supply the authentication unit with authentication data used as sample data indicating that a user is verified in an authentication processing of a user instructing access to the storage medium, the authentication data being corresponding to the authentication mode ID obtained together with the unlock command from the unlock command obtaining means;
an authentication result obtaining section to obtain, from the authentication unit, an authentication result of the authentication processing performed by using the authentication data supplied from the authentication data supplying section;
an authentication result confirming section to confirm contents of the authentication result; and
a release section to release inhibition of access to the storage medium from outside if, as a result of confirmation made by the authentication result confirming means, the user is verified.
